Europäisches Patentamt

(19) European Patent Office

Office européen des brevets

(11) EP 0 929 022 A1

## (12) EUROPEAN PATENT APPLICATION

(43) Date of publication:
14.07.1999 Bulletin 1999/28

(51) Int. Cl.$^6$: **G05F 3/26**, G08C 23/04

(21) Application number: 98121314.3

(22) Date of filing: 10.11.1998

(84) Designated Contracting States:
**AT BE CH CY DE DK ES FI FR GB GR IE IT LI LU
MC NL PT SE**
Designated Extension States:
**AL LT LV MK RO SI**

(30) Priority: **10.11.1997 US 966917**

(71) Applicant:
**SILICONIX INCORPORATED
Santa Clara, CA 95056-0951 (US)**

(72) Inventor: **Williams, Richard K.
Cupertino, CA 95014 (US)**

(74) Representative: **Kolb, Georg
Daimler-Benz AG,
Postfach 35 35
74025 Heilbronn (DE)**

### (54) Method and circuit for driving infrared-emitting diode

(57) An infrared-emitting diode (IRED) is supplied with a current from a constant current source. This technique significantly reduces the power loss that occurs in a battery-powered remote control device, for example, as the battery voltage varies from a fully-charged level to a level at which the battery must be recharged. Because a certain level of current is required to operated the IRED, in this situation the circuit must be fabricated such that the required current is supplied when the battery needs charging. When the battery is operating at a higher level, power is wasted exponentially as excess current is supplied through the IRED. Supplying the IRED with a constant current source greatly reduces the power loss. The constant current source can take a wide variety of forms from a relatively simple MOSFET operating in saturation to more complex arrangement containing, for example, current mirrors, additional current sources, pass transistor logic, and digital-to-analog converters. The constant current source can also be fabricated with bipolar transistors and biCMOS technology

FIG. 1

EP 0 929 022 A1

## Description

FIELD OF THE INVENTION

This invention relates to circuits and methods of driving infrared-emitting diodes, particularly those that are supplied by a battery.

BACKGROUND OF THE INVENTION

Infrared-emitting diodes are similar to light-emitting diodes (LEDs) except that they produce radiation in the infrared portion of the spectrum, which includes frequencies that are just below the visible portion of the spectrum. Infrared radiation is currently used for a variety of purposes, including remote controls in television and the like. Infrared radiation has the property of traveling directly in a straight line of sight and, unlike radio waves, cannot travel through solid objects. However, infrared waves are adequate for communication in a single room or other situations of close proximity, and they have a limited capability to reflect off the walls and other flat surfaces within a room.

Thus infrared has heralded a new era of communications. Infrared-emitting diodes along with receivers or photodiodes can be placed in computers, printers, and cellular phones to establish wireless communication links between these devices. For example, if faxes or e-mail are stored in a cellular phone, one could simply point the cellular phone at a printer, and the printer would print out hard copies. Or frequently called numbers could be downloaded from a cellular phone to a computer or vice-versa.

Infrared communications can be one-directional, but in most cases they are two-directional. In the latter case, one device sends information and a second device receives the information and sends information back to the first device. A number of firms have formed an organization called the Infrared Data Association (IRDA), which has developed a standard, known as the standard infrared communication protocol, prescribing the angles, brightness, data rates, format, etc., for the transmission of information at relatively slow speeds (hundreds of kilobits per second). A new, fast infrared communications protocol covers transmissions up to 4 megabits per second. The IRDA protocol does not specify the software or hardware implementation of the communication system.

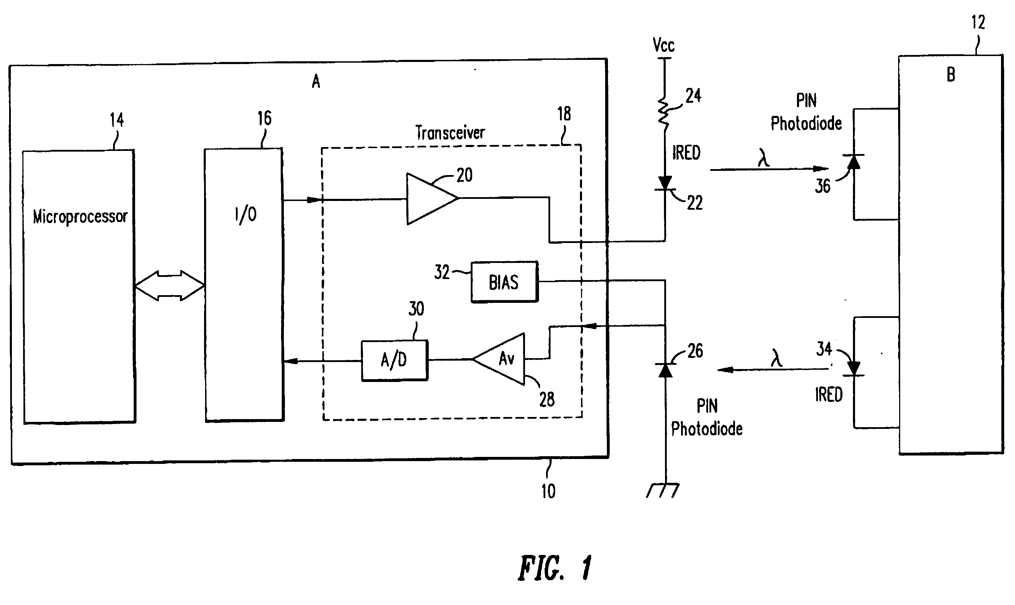

Fig. 1 shows a block diagram of a typical two-directional infrared communication link between a pair of devices 10 and 12, each of which could be, for example, a computer, a printer, a cellular phone, etc. Device 10 contains a microprocessor 14 which "talks" to an input/output (I/O) chip 16 which in turn drives a transceiver 18. Transceiver 18 typically includes a buffer 20 that actually drives an infrared-emitting diode (IRED) 22. IRED 22 is connected through a current-limiting resistor 24 to a supply voltage $V_{CC}$. Infrared communications are received by a PIN photodiode 26 which is connected to an amplifier 28 and an analog-to-digital (A/D) converter 30. PIN photodiode 26 is normally biased off (i.e., reverse-biased) by a bias 32, thereby ensuring that the current flowing through PIN photodiode 26 is proportional to the infrared photons (indicated by $\lambda$) received from device 12. That analog signal is converted into a digital signal in A/D converter 30, either a code or string of pulses which is interpreted by the I/O unit 16 according to a protocol developed by IRDA or competing standards such as those developed by Apple or Sharp or other emerging consumer products companies.

Device 12 generally contains corresponding circuitry, including an IRED 34 and a photodiode 36.

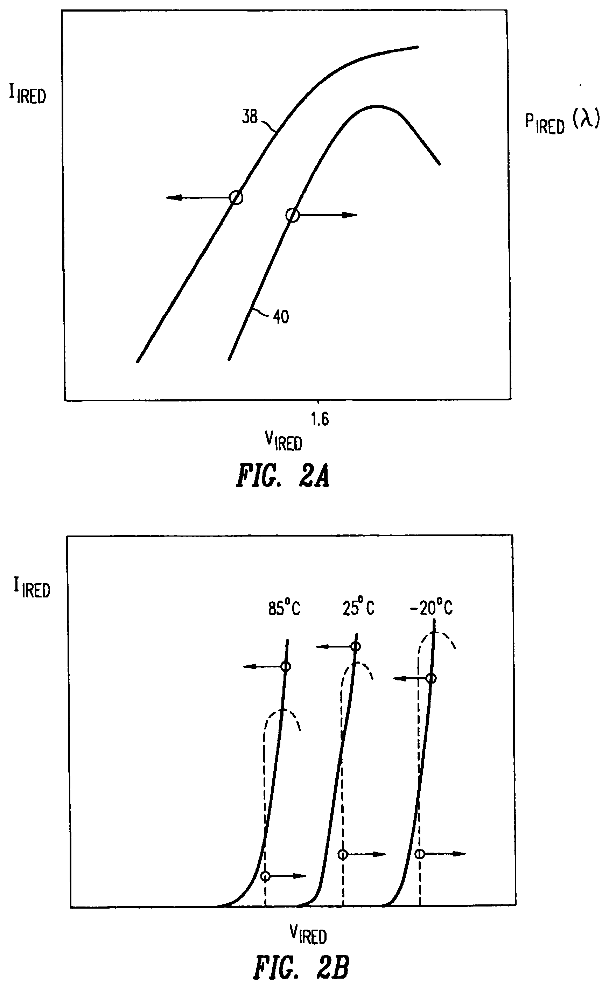

As noted above, IRED 22 is connected to a supply voltage $V_{CC}$ through a current limiting resistor 24. Fig. 2A illustrates a graph showing the current ($I_{IRED}$) through and power ($P_{IRED}(\lambda)$) emitted as infrared radiation by a typical IRED (such as IRED 22) as a function of the voltage ($V_{IRED}$) across the IRED, curve 38 showing current and curve 40 showing optically emitted power. As indicated, both the current and power output (brightness) increase generally with voltage until the current reaches a very high level, at which point heating causes the quantum efficiency to drop. The IRED then becomes less efficient and emits less light and the optical power output falls off. The current increases more slowly because the device is becoming very resistive. The voltage at which the device operates efficiently is nominally 1.6 V, because it is made of gallium arsenide and aluminum gallium arsenide layers in a lateral-junction sandwich-type structure. As shown in Fig. 2B, the optimal operating voltage changes as a function of ambient temperature, a higher temperature reducing the optimal voltage and a lower temperature increasing the optimal voltage. This variation can be on the order of a hundred millivolts (± 200 mV) around nominal or room temperature. Diodes constructed of different materials or sandwich layers may have a different turn-on voltage and may emit in different parts of the IR spectrum.

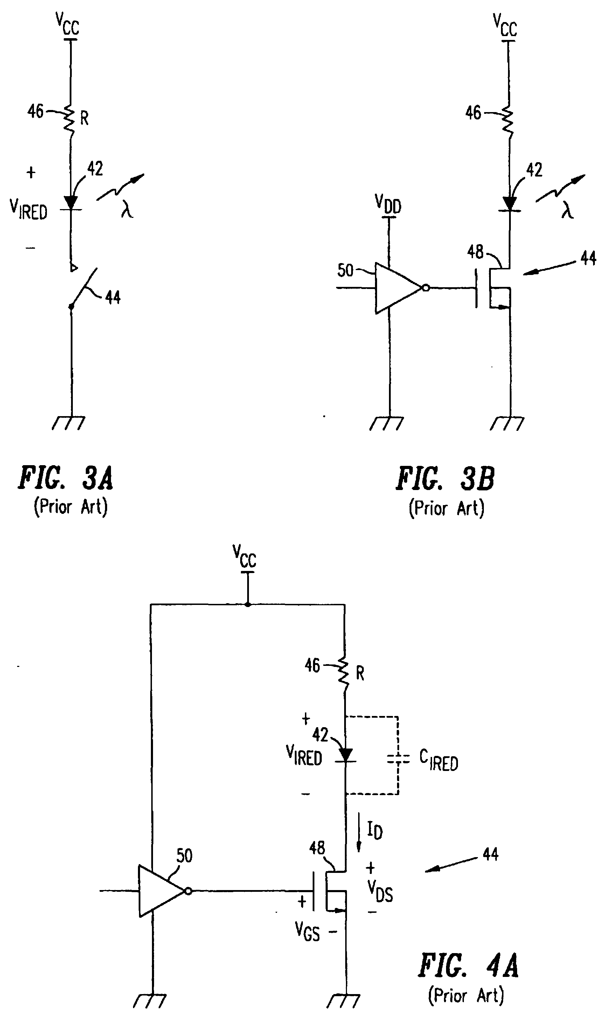

Fig. 3A shows a simplified circuit for controlling an IRED 42, including a switch 44 and a current-limiting resistor 46. Switch 44 represents either a very low resistance or an open circuit, and it is opened and closed to pulse the IRED 42 on and off. The maximum current is set at $V_{CC}$ minus the voltage across IRED 42 ($V_{IRED}$), divided by the value of resistor 46. Fig. 3B shows switch 44 implemented as an N-channel MOSFET 48 having a gate driven by an inverter 50 to indicate clearly that MOSFET 48 is being operated as a switch, i.e., in a digital or "on-off" manner.

Fig. 4A is another view of Fig. 3B, showing that there is a capacitance $C_{IRED}$ across IRED 42. This capacitance accounts for charge stored in the device during operation, both as minority carriers and depletion capacitance.

**Fig. 4A** also shows a voltage $V_{IRED}$ across IRED **42** and a voltage $V_{DS}$ across the drain and source of MOSFET **48**. The current through IRED **42** and MOSFET **48** is indicated as $I_D$ and the gate-to-source voltage on MOSFET **48** is shown as $V_{GS}$.

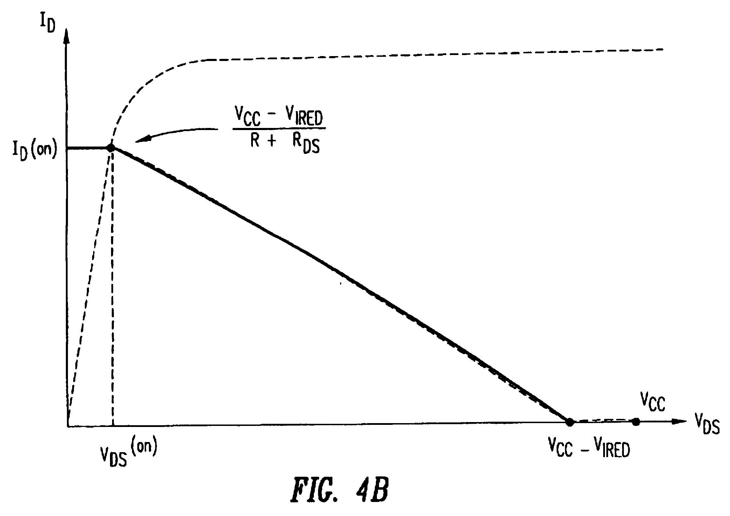

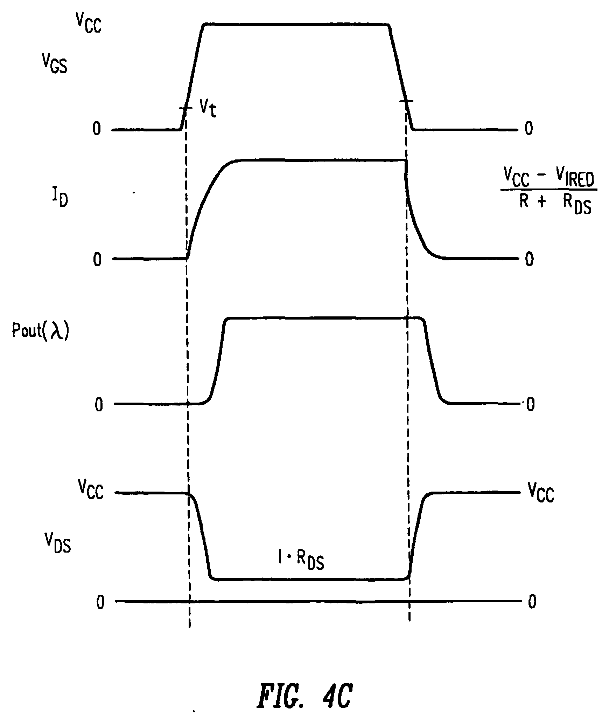

**Fig. 4B** shows a plot of $I_D$ versus $V_{DS}$ (solid line) in the load line shown in **Fig. 4A**. Starting with $V_{GS} = 0$ at the right side of the graph, as $V_{GS}$ increases MOSFET **48** starts to turn on. However, $I_D$ remains at zero until there is a sufficient voltage $V_{IRED}$ across IRED **42** to turn it on. Thus at $V_{CC} - V_{IRED}$, $I_D$ begins to increase until it reaches a maximum level equal to

$$\frac{V_{CC} - V_{IRED}}{R + R_{DS}}$$

when MOSFET **48** is fully turned on. This is the highest current that the circuit can be expected to see. The dashed line in **Fig. 4B** represents one of the IV characteristic curves of MOSFET **48**, with the full supply voltage $V_{CC}$ driving the gate of MOSFET **48**. When MOSFET **48** is on it must simultaneously satisfy the load line equation and the MOSFET characteristic curve, and that occurs at the point labeled $V_{DS}(on)$, $I_D(on)$.

**Fig. 4C** shows the time-dependent behavior of $V_{GS}$, $I_D$, $P_{OUT}(\lambda)$ and $V_{DS}$ during a complete switching cycle ($V_{GS}$ from zero to $V_{CC}$ and back to zero). Even though the gate of MOSFET **48** ramps up quickly, the drain current $I_D$ is delayed in turning on and turning off by the fact that there is some capacitive lag. Accordingly, there is a delay before the voltage across IRED **42** hits the level at which infrared radiation is generated. There is some power loss during this interval. In communications systems, a delay between control signal and actual data transmission adversely limits the maximum communication rate. To counteract the delay, the IRED diode must be driven at high currents to achieve rapid transitions despite the charging and discharging of its parasitic capacitance. Furthermore, there is a power loss in MOSFET **48** equal to $I_D(on)^2 \cdot R_{DS}$ after it has reached a stable on condition.

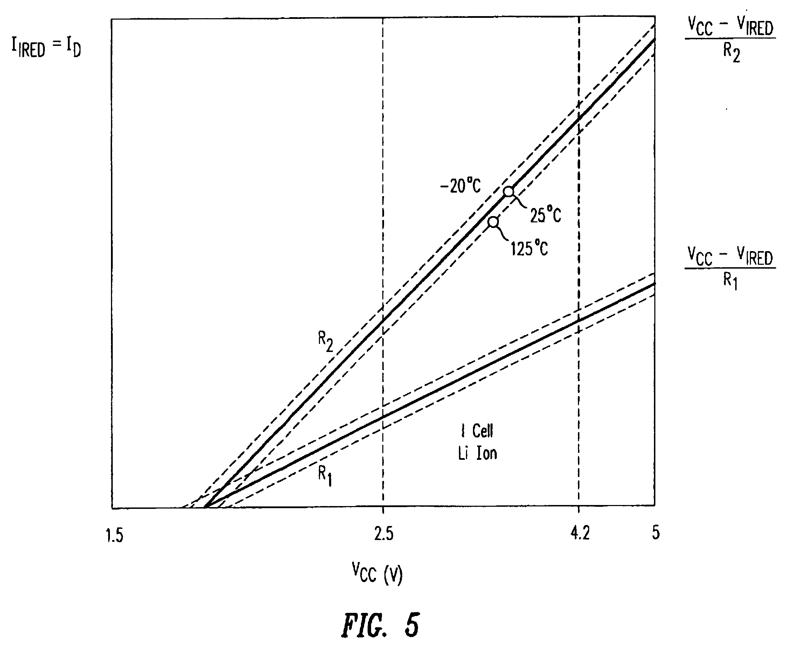

**Fig. 5** is a plot of the current $I_{IRED} = I_D$ as a function of the supply voltage $V_{CC}$ for two values of the current-limiting resistor **46**, $R_1$ and $R_2$. ($R_2$ being the smaller). For each value of R, hypothetical curves are shown for temperatures of -20° C, 25° C and 125° C. As indicated, current begins to flow through the IRED when the supply voltage $V_{CC}$ reaches about 1.6 V and increases linearly to the maximum value of $V_{CC} = 5$ V shown.

A single-cell lithium ion battery normally operates in a range from 2.5 V (needs charging) to 4.2 V (fully recharged). These limits are shown in **Fig. 5**. It is evident that whether $R_1$ or $R_2$ is selected the current through the circuit will vary significantly in the range from 2.5 V to 4.2 V. This variation is greater if greater brightness from the IRED ($R_2$) is desired.

This variation in the current through the circuit represents a very significant power loss. An example will serve to illustrate the point. Assume that a particular IRED has a trip point (i.e., turns on) at 1.7 V and requires 0.5 A of current to provide a desired level of brightness. Therefore, a minimum level of $I_{IRED}$ at 0.5 A must be guaranteed. Using a lithium ion battery, the supply voltage may go as low as 2.5 V. With these parameters, the value of the current-limiting resistor is set by the following equation:

$$R = \frac{V_{CC} - V_{IRED}}{I_{IRED}}$$

$$R = \frac{2.5\,V - 1.7\,V}{0.5\,A}$$

$$R = 1.6\,\Omega$$

The power drawn by the circuit at low battery is given by:

$$P = \frac{V_{CC}^2}{R} = \frac{(2.5\,V)^2}{(1.6\,\Omega)} = 3.9\,W$$

Assume that a different IRED (or the same IRED at a different temperature) has a trip point at 1.4 V and that the battery is fully charged at 4.2 V. The current through the circuit is given by:

$$I_{IRED} = \frac{V_{CC} - V_{IRED}}{R}$$

$$I_{IRED} = \frac{4.2\,V - 1.4\,V}{1.6\,\Omega}$$

$$I_{IRED} = 3.3\,A$$

This represents a total power consumption of:

$$P = \frac{V_{CC}^2}{R} = \frac{(4.2\,V)^2}{(1.6\,\Omega)} = 11\,W$$

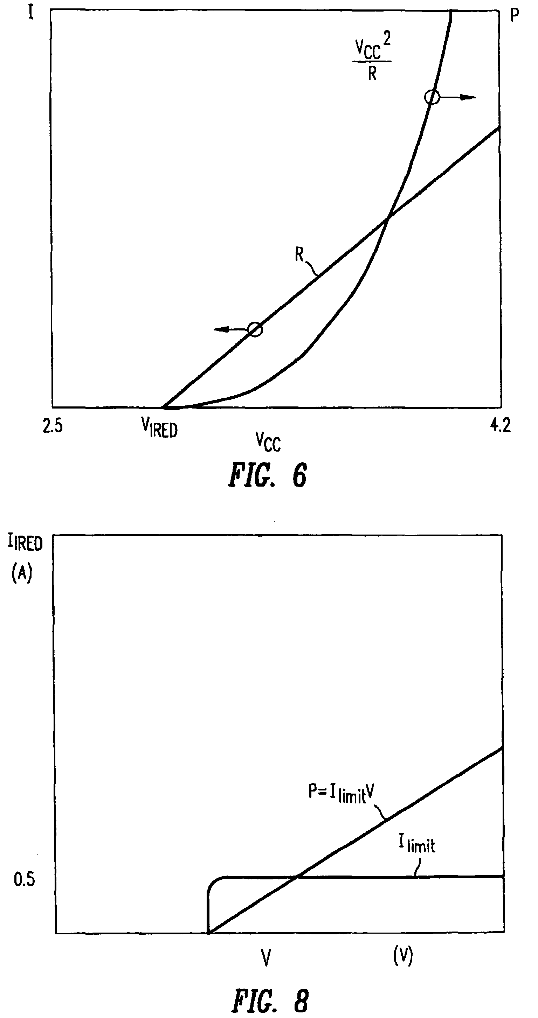

Thus, with the battery fully charged there is an additional power loss of over 7W, and this results from the need to assure 0.5A of current when the battery is in its low condition. This problem is illustrated graphically in **Fig. 6**, which shows the linear rise in current and the exponential rise in power as $V_{CC}$ increases.

Thus prior art circuits using switches have the problem that the brightness of the IRED will be too variable and the battery life will be too short using current-limiting resistors. Furthermore, by selecting a low resistance value for the low battery condition, the IRED may be overdriven during the high battery condition, resulting in excessive heating, reduced quantum efficiency, and possible device damage. Using a DC-to-DC voltage converter to provide a fixed voltage supply rail is not a satisfactory solution for most consumer products because of the added complexity, cost, size, switching noise, and possible interference with RF communication (broadcast frequency bands). Also, the use of switch mode or linear regulation is often dedicated to critical circuits in a product requiring superior regulation or (in the linear regulator case) low noise. Sharing the regulator between light regulation loads and the IRED driver forces the regulator to regulate during the high current surges associated with the IRED as well as survive an increased thermal load. Instead, it is preferable to have the device driven directly from the battery.

Accordingly, there is a clear need for a solution to this problem.

## SUMMARY

In accordance with this invention, a infrared-emitting diode (IRED) is supplied by circuitry which includes a constant current source. In many embodiments the current supplied by the constant current source is a function of a control signal and is not a function of the supply voltage.

The current source can take a wide variety of forms. A single MOSFET or bipolar transistor operated in its saturated region can be used as a current source. A current mirror using either MOSFETs or bipolar transistors can be used to reflect a constant current into the circuit into which the IRED is connected.

The current source can be placed on the high side or the low side of the IRED. It can be used with or without a current-limiting resistor and can be placed on the same side of the IRED as a current-limiting resistor or on the opposite side of the IRED from a current-limiting resistor.

A plurality of current sources can be connected via switches to the IRED to provide different levels of current or to provide redundancy in case one such switch or current source fails to operate properly.

## BRIEF DESCRIPTION OF THE DRAWINGS

Fig. 1 illustrates a schematic block diagram of a two-way infrared communication link between two devices.
Fig. 2A illustrates a graph showing the current and power in an IRED as a function of voltage.
Fig. 2B illustrates a graph showing the current through an IRED as a function of voltage and temperature.
Fig. 3A illustrates a conventional switching circuit including an IRED
Fig. 3B illustrates the circuit of Fig. 3A with the switch implemented as a MOSFET.
Fig. 4A illustrates a slightly different embodiment of the circuit shown in Fig. 3A.
Fig. 4B illustrates a graph showing the current through the IRED of Fig. 4A as a function of the voltage drop across the MOSFET.
Fig. 4C illustrates graphs showing the behavior of several perimeters in the circuit of Fig. 4A during one switching cycle of the MOSFET.

**Fig. 5** illustrates a graph showing the current through the circuit of **Fig. 4A** as a function of $V_{CC}$ at two different values of the bias resistor and three different temperatures.

**Fig. 6** illustrates a graph showing the behavior of the current and power consumption of the circuit shown in **Fig. 4A** as a function of $V_{CC}$.

**Figs. 7A** and **7B** illustrate alternative circuit diagrams of an IRED connected in accordance with the invention.

**Fig. 8** illustrates a graph showing the current and power consumption in the circuits of **Figs. 7A** and **7B**.

**Figs. 9A-9C** show schematic diagrams of several circuits for providing a constant current to an IRED, with the constant current source and switch being located on the high side of the IRED

**Figs. 10A-10C** show schematic diagrams of circuits similar to those shown in **Figs. 9A-9C**, except that the switches and current sources are on the low side of the IRED.

**Figs. 11A-11C** illustrate schematic diagrams of circuits in which the current sources are on the high side of the IRED and switches are on the low side of the IRED. In the circuit of **Fig. 11B**, there is also a switch on the high side of the IRED.

**Figs. 12A-12C** illustrate schematic diagrams of circuits in which the switches are in the high side of the IRED and the current sources are on the low side of the IRED. In **Fig. 12B**, there is also a switch on the low side of the IRED.

**Figs. 13A** and **13B** illustrate schematic diagrams of circuits which include a switched current source and a separate switch.

**Figs. 13C** and **13D** illustrate schematic diagrams of circuits which include a switched current source capable of providing two current levels.

**Fig. 14A** illustrates a schematic diagram of a circuit in which the switched current source includes a MOSFET.

**Fig. 14B** illustrates a schematic diagram of a circuit in which the switched current source includes a bipolar transistor.

**Fig. 14C** illustrates a schematic diagram of a circuit in which the constant current source includes a current mirror pair of MOSFETs supplied through a biasing resistor

**Fig. 14D** illustrates a similar arrangement in which the current mirror pair is supplied by another current source.

**Figs. 14E** and **14F** illustrate schematic diagrams of circuits which are similar to those shown in **Figs. 14C** and **14D**, respectfully, except that the current mirror includes bipolar transistors.

**Fig. 14G** shows a schematic diagram of a circuit in which the current source includes an N-channel MOSFET whose gate is controlled by an inverter which applies a fixed bias at a value resulting in a prescribed saturation current in the MOSFET.

**Fig. 14H** shows a schematic diagram in which the current source includes a current mirror pair of bipolar transistors supplied by a constant current source and controlled by an inverter.

**Fig. 14I** shows a schematic diagram of a circuit in which the current source includes a current mirror pair of MOSFETs supplied by a current source and controlled by an inverter.

**Fig. 14J** is a schematic diagram of a circuit that is similar to the circuit of **Fig. 14I**, except that the second current source includes a current mirror pair of MOSFETs.

**Fig. 14K** illustrates a schematic diagram of a circuit in which the current source includes two current mirrors formed of bipolar transistors and an inverter.

**Figs. 15A** and **15B** illustrates schematic diagrams of circuits in which the constant current and switching functions are provided by separate MOSFETs.

**Figs. 15C** and **15D** are similar to **Figs. 15A** and **15B**, respectively, except that the constant current function is provided by a depletion-mode MOSFET.

**Figs. 15E** and **15F** illustrate schematic diagrams of circuits in which the constant current function is provided by a current mirror and the switching function is provided by a separate MOSFET.

**Fig. 16A** illustrates a schematic diagram of a circuit in which the current source includes a MOSFET whose gate is biased alternatively at two different levels to provide different currents.

**Figs. 16B** and **16D** illustrate schematic diagrams of circuits in which the current source includes a current mirror pair supplied by alternative constant current sources.

**Fig. 16C** illustrates a schematic diagram of a circuit in which the constant current source includes a current mirror pair supplied by alternative voltage levels.

**Figs. 16E-16J** illustrate schematic diagrams of circuits in which pass transistor logic is used to control the size of the constant current through the IRED by selecting an associated voltage reference.

**Figs. 17A** and **17B** illustrate schematic diagrams of circuits in which the size of the current through the current source transistor is controlled by a resistor tap network.

**Figs. 17C** and **17D** illustrate a schematic diagram of a circuit in which the size of the current through the IRED is controlled by a digital-to-analog converter.

**Figs. 18A-18C** illustrate schematic diagrams of additional embodiments including a current-mirror pair of transistors with a power disconnect switch to shut off the bias supply.

**Figs. 19A-19J** illustrate schematic diagrams of various embodiments in which the current source is connected on the high side of the IRED.

**Fig. 19K** illustrates a graph showing the behavior of the circuits shown in **Figs. 19I** and **19J**.

**Figs. 20A-20H** illustrate schematic diagrams of various embodiments including a constant current device and a switch connected in series on the high side of the IRED.

**Figs. 21A-21D** illustrate schematic diagrams of embodiments in which the current source and switch are located on opposite sides of the IRED.

DESCRIPTION OF THE INVENTION

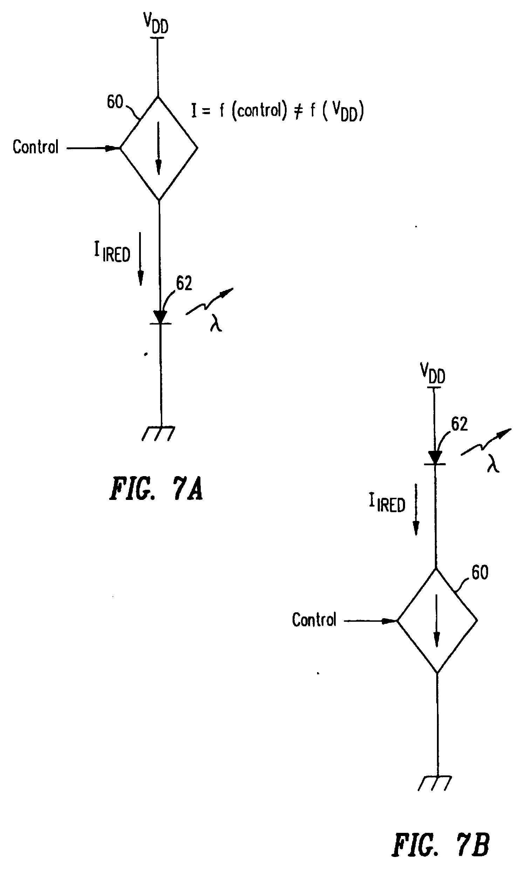

**Fig. 7A** illustrates a basic circuit in accordance with this invention, including a dependent current source **60** connected in series with an infrared-emitting diode (IRED) **62** with current source **60** being connected between the supply voltage $V_{CC}$ and the IRED **62**. **Fig. 7B** shows a similar circuit in which the dependent current source **60** is connected between IRED **62** and ground. Putting the matter another way, in **Fig. 7A** current source **60** is on the anode side or high side of IRED **62**, and in **Fig. 7B** current source **60** is on the cathode side or low side of IRED **62**. In each instance dependent current source **60** supplies a current that is a function of a control signal and is not a function of the supply voltage $V_{CC}$. In the broadest sense, the current conducted by current source 60 could take on any value including zero, i.e., no current, depending on its control input.

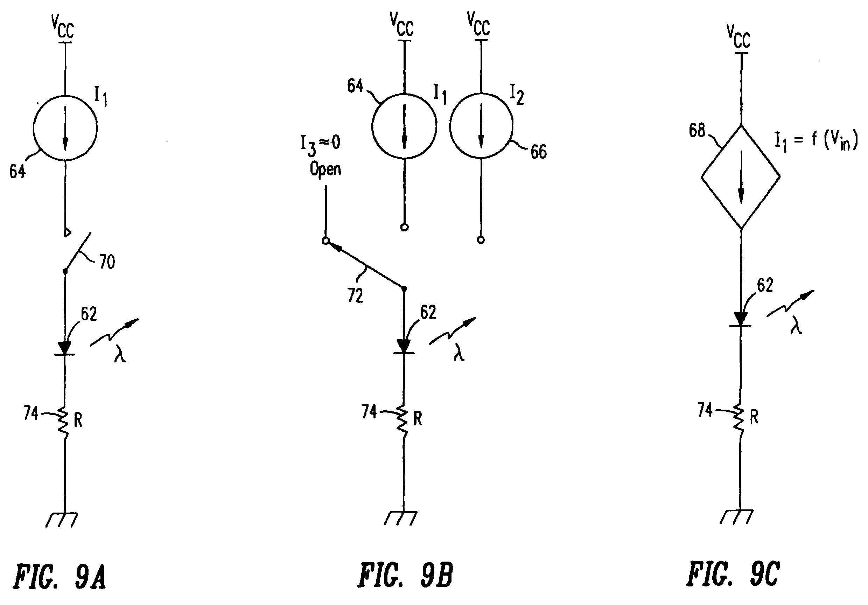

In the circuits shown in **Figs. 7A** and 7B, the total power consumed is equal to $V_{CC} \cdot I_{IRED}$. Accordingly, the power consumption increases directly in proportion to $V_{CC}$ rather than in accordance with the square law reflected in **Fig. 6**. This results in a significant saving in power in compared with prior art circuits. This is shown in the graph of **Fig. 8**, which illustrates the linear increase in power consumption with a constant current equal to 0.5A.

**Figs. 9A-9C** illustrate circuits for providing a switched current to the IRED in **Fig. 9A**, a current source **64** providing a current $I_1$ is connected to IRED **62** via a switch **70** which allows IRED **62** to be pulsed on or off. In **Fig. 9B**, a second current source **66**, providing a current $I_2$, is provided and a single-pole, triple-throw (SP3T) switch **72** is used to provide three levels of current to IRED 62, $I_1$, $I_2$ or $I_3 = 0$. Selecting between two currents $I_1$ and $I_2$ allows the brightness of the IRED to be varied according to the range of communication distance desired. For long range communication (e.g., over one meter) at fast data rates (e.g., 4 Mbit/sec) the higher current value (e.g., 300 to 600 mA) can be used. At short distances (e.g., 20 cm) when the two communicating products are in close proximity, the current can be lowered to a value of 40 to 100 mA to conserve battery life and reduce heat.

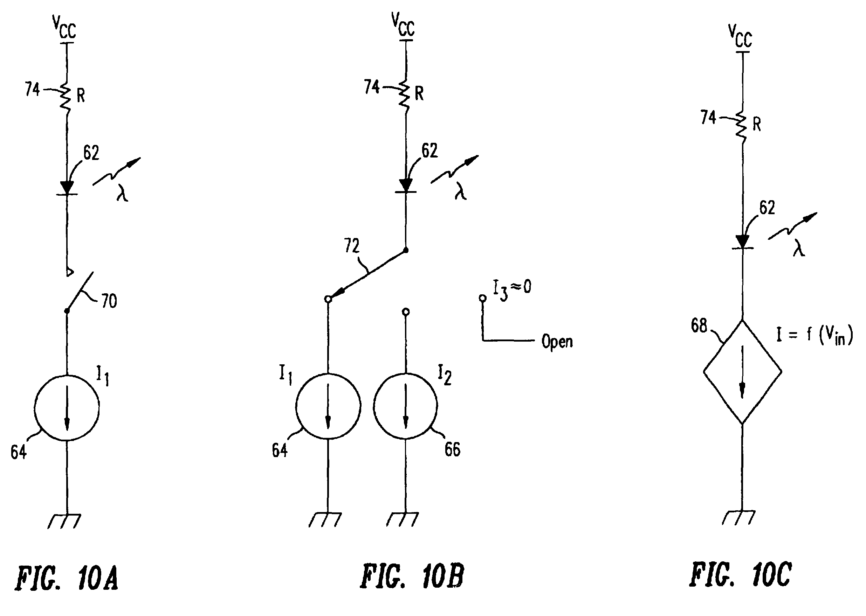

In **Fig. 9C**, a variable current source **68** provides a constant current which is a function of an input signal $V_{in}$ and which may be biased into any current including zero current. In **Figs. 9A-9C**, both the current sources and switches are on the high side of the IRED, and in each case a current-limiting resistor **74** is provided on the low side of IRED **62**. **Fig. 10A-10C** illustrate circuits that are similar to **Figs. 9A-9C**, respectfully, except that the switches and current sources are on the low side of IRED **62** and the current-limiting resistor is on the high side of IRED **62**. In all cases the current-limiting resistor **74** is optional and may be omitted. Its value is to prevent excessive currents from flowing or dangerous levels of IR radiation from being emitted in the event that the current source becomes shorted. In any event, where a current-limiting resistance is used, the small signal resistance of the current source **64, 66, 68** is so much greater than the resistance of the resistor **74** that the current is determined by the current source.

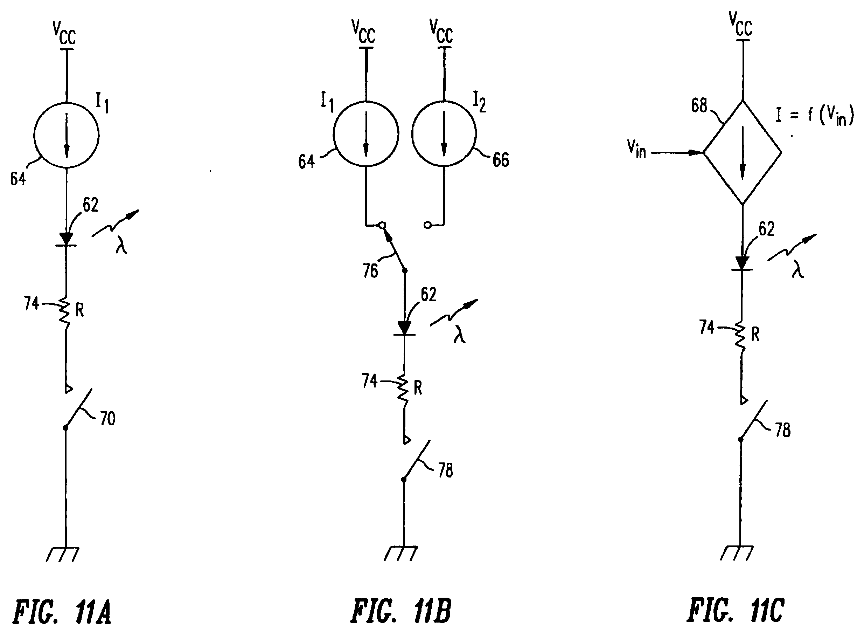

In **Fig. 11A** current source **64** is on the high side of IRED **62**, whereas switch **70** is on the low side of IRED **62**. In **Fig. 11B**, current sources **64** and **66** are connected via a single-pole, double throw (SPDT) switch **76** on the high side of IRED **62**, and a single-pole switch **78** is connected on the low side of IRED **62**. In **Fig. 11C**, a programmable current source **68** is on the high side of IRED **62**, and switch **78** is on the low side of IRED **62**. In each instance, the optional resistor **74** is connected on the low side of IRED **62** (or anywhere in the series path of the IRED).

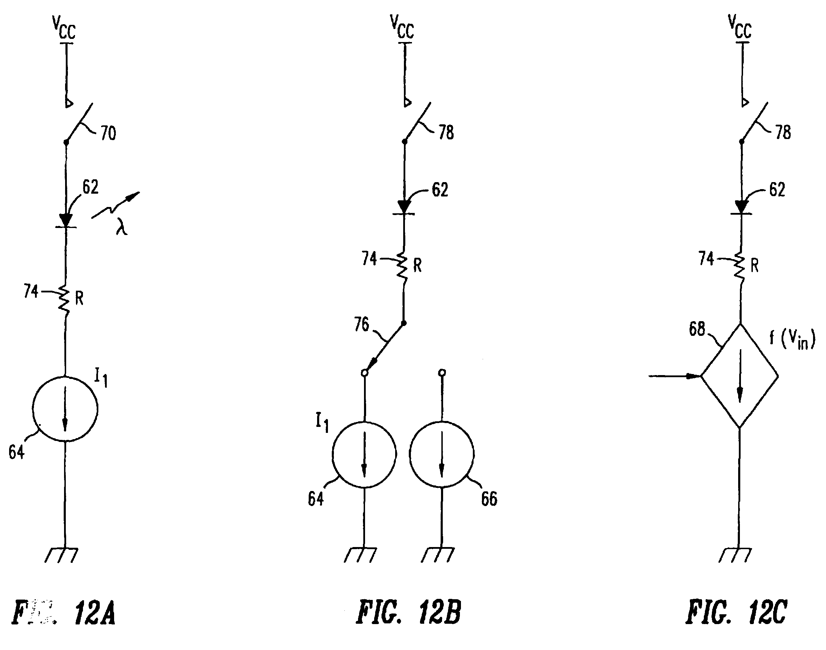

In **Fig. 12A**, the switch **70** is connected on the high side of IRED **62**, and the current source **64** is connected on the low side of IRED **62**. In **Fig. 12B**, current sources **64** and **66** and the single-pole, double-throw (SPDT) switch **76** are connected on the low side of IRED **62**, and single-pole switch **78** is connected on the high side of IRED **62**. In **Fig. 12C**, the variable (programmable) current source **68** is connected on the low side of IRED **62** and the switch **78** is connected on the high side of IRED **62**.

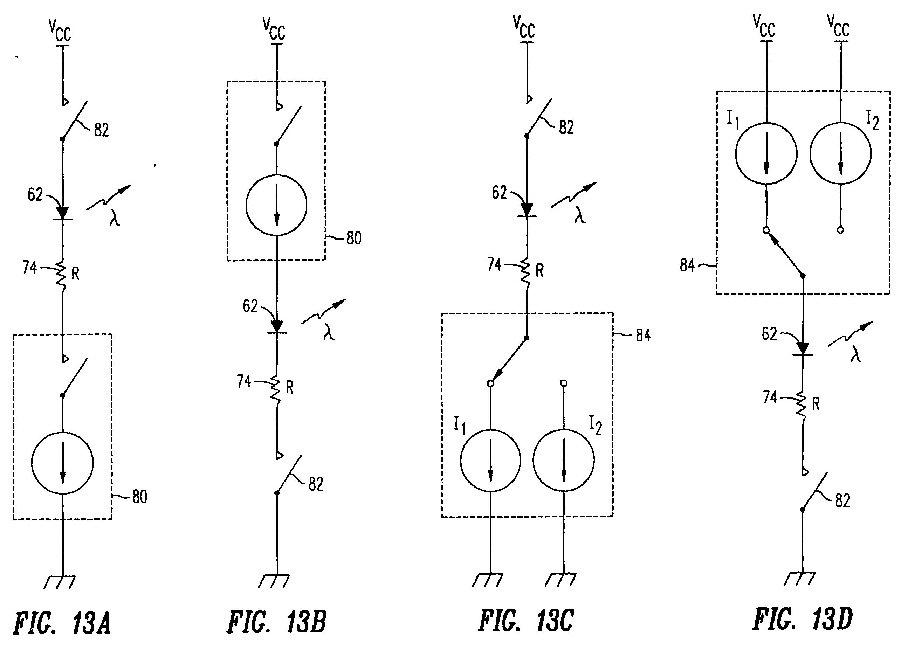

**Figs. 13A** and **13B** show alternative embodiments including a switched current source **80**. In **Fig. 13A** switched current source **80** is connected on the low side of IRED **62** and in **Fig. 13B** switched current source **80** is connected on the high side of IRED **62**. In both cases, a switch **82** is connected on the opposite side of IRED **62** to provide redundant switching so that one could assure that the IRED **62** could be turned off even if one of the switches should fail. **Figs. 13C** and **13D** show similar embodiments including a switched current source **84** which is capable of providing two current levels whenever switch 82 is closed and zero current whenever switch 82 is opened.

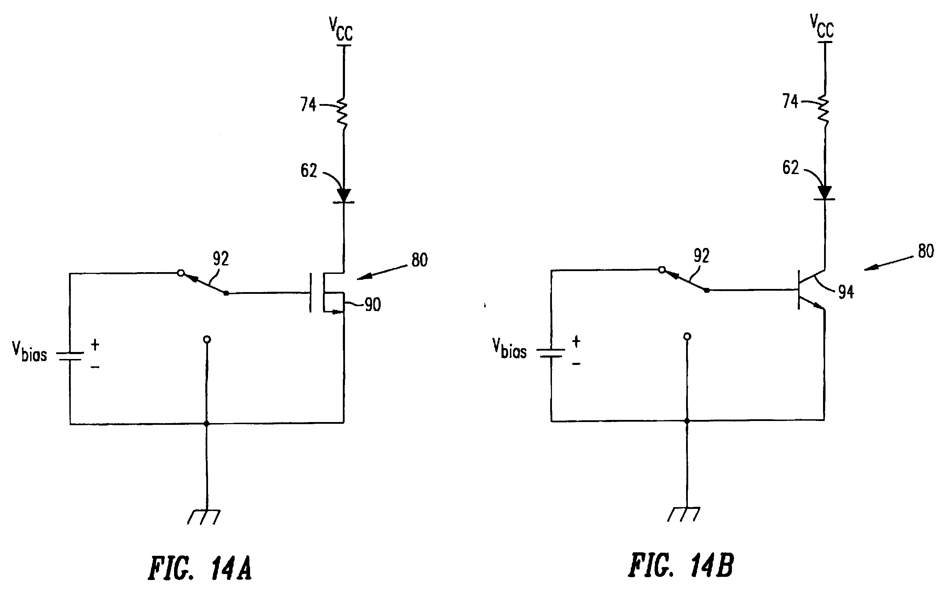

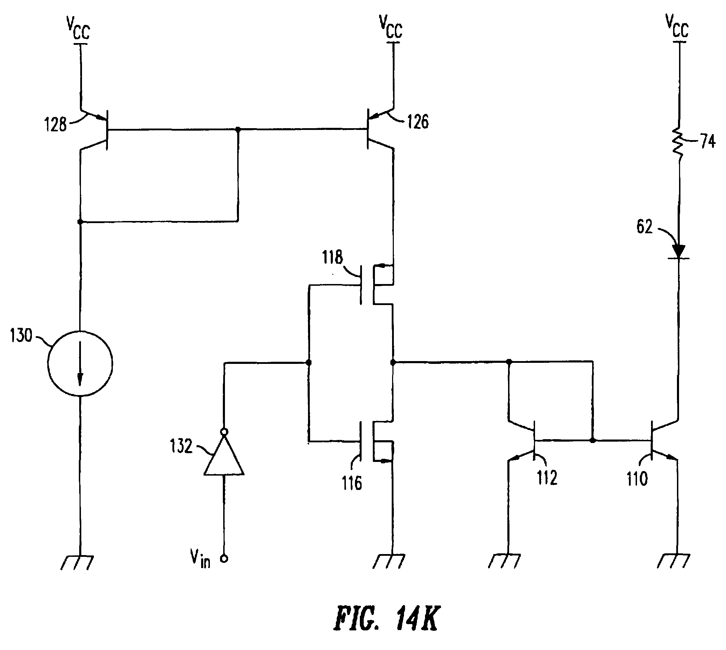

**Fig. 14A** illustrates a possible structure of switched current source **80**, which includes an N-channel MOSFET **90** and a single-pole, double-throw switch **92**. Switch **92** alternatively connects the gate of MOSFET **90** to $V_{bias}$ or to ground. MOSFET **90** is sized such that it is operating in saturation when its gate is connected to $V_{bias}$. When switch **92** connects the gate of MOSFET **92** ground, MOSFET **90** is turned off. **Fig. 14B** shows a similar circuit including a bipolar transistor **94**. The value of the constant current using a single MOSFET or bipolar transistor depends on the value of the bias voltage and the transconductivity of the transistor. In the case of such a single transistor current source, the device does not behave as an ideal current source at extremely low voltages where it instead acts like a transistor, or at extremely high current densities where other effects may occur. The construction and size of the device must therefore be considered in this regard. Also, the value of the current will vary with temperature unless $V_{bias}$ is adjusted to compensate for temperature variations.

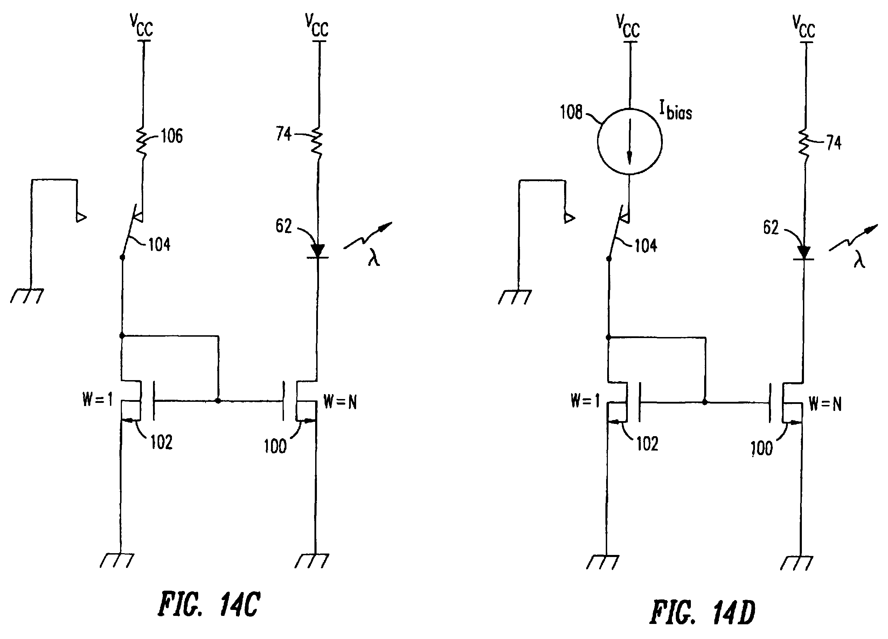

**Fig. 14C** shows an embodiment in which a pair of MOSFETs **100** and **102** provide a current mirror. In a typical arrangement, the gate width of MOSFET **100** would be greater than the gate width of MOSFET **102** by a factor of N. MOSFET **102** is connected via a switch **104** through a biasing resistor **106** to the supply voltage $V_{CC}$. The gate and drain of MOSFET **102** are tied together. As is well known in the art, when switch **104** is thrown so as to connect MOSFET **102** to the supply voltage $V_{CC}$, the respective currents flowing through MOSFETs **100** and **102** differ by the factor N. When switch **104** connects the gate of MOSFETs **100** and **102** to ground, MOSFET **100** is turned off, interrupting the current flow through IRED **62**. The benefit of using a MOSFET mirror is that it reduces sensitivity to process variations in threshold voltage and temperature. If resistor 106 has a low temperature coefficient, the part will behave relatively independently of temperature. Fig. **14D** shows a similar arrangement except that a current source **108** providing a current $I_{bias}$ is substituted for resistor **106**. The current $I_{bias}$ flows through MOSFET **102** and is reflected (by the factor of N) into MOSFET **100**. Again, switch **104** can be thrown to connect the gates of MOSFET **100** and **102** to ground, thereby turning MOSFET **100** off. The circuit shown in **Fig. 14D** could provide a better power supply rejection and less temperature dependence than the circuit shown in **Fig. 14C**.

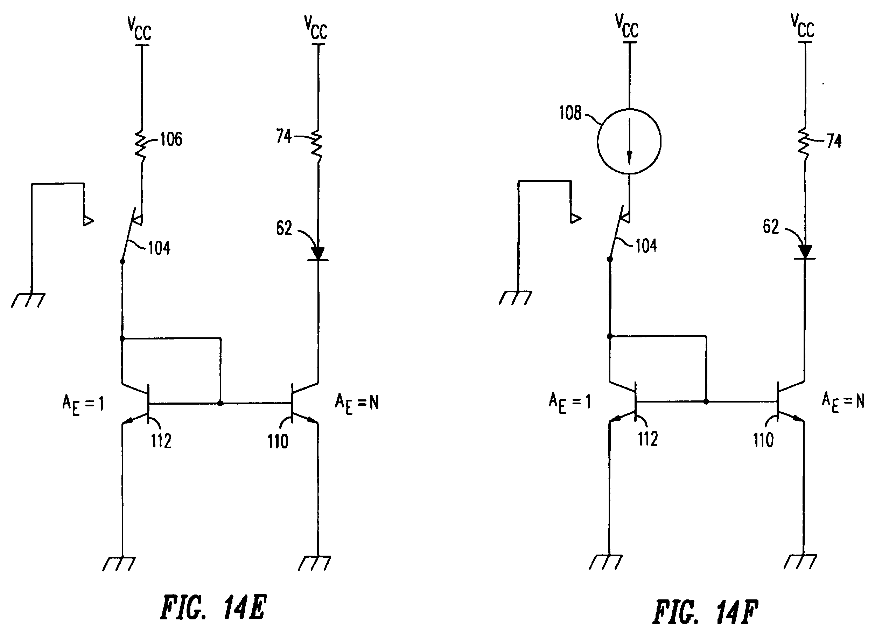

**Figs. 14E** and **14F** show circuits which are similar to those shown in **Fig. 14C** and **14D**, respectively, except that the current mirror includes bipolar transistor **110** and **112**. In these circuits, the current flowing through IRED **62** is determined by the ratio of the respective emitter areas of MOSFETs **110** and **112**. Bipolar-matching is often easier than MOSFET design, and reduces temperature sensitivity.

**Fig. 14G** shows an arrangement in which an N-channel MOSFET **114** is connected in series with IRED **62**. An inverter including MOSFETs **116** and **118** is connected to the gate of MOSFET **114**. When $V_{in}$ is low, P-channel MOSFET **118** is turned on connecting $V_{bias}$ to the gate of MOSFET **114** and turning it on. The value of $V_{bias}$ must be selected to provide the desired current for a MOSFET having a given transconductance. When $V_{in}$ is high, the N-channel MOSFET **116** is turned on, connecting the gate of MOSFET **114** to ground and turning it off.

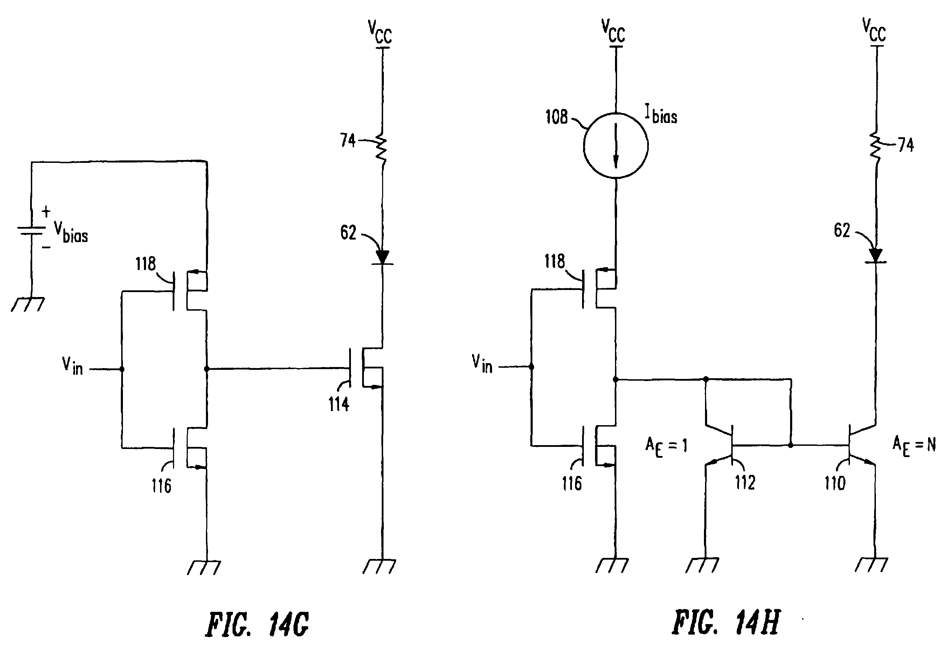

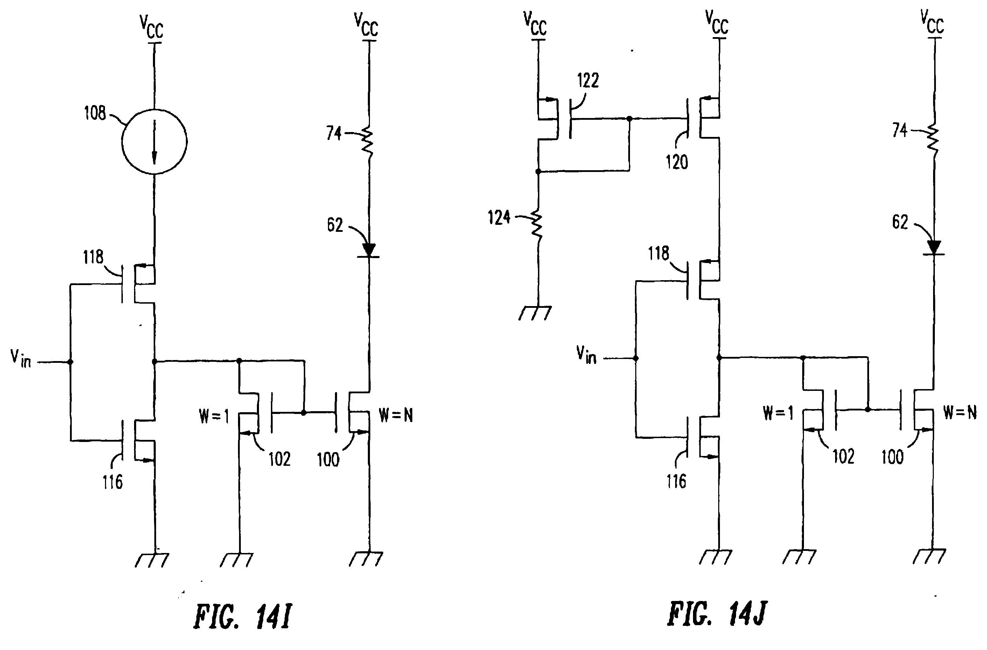

In the circuit shown in **Fig. 14H** the inverter containing MOSFETs **116** and **118** is connected to the pair of bipolar transistor **110** and **112**. When $V_{in}$ is low, current source **108** is connected to transistor **112** and $I_{bias}$ flows through transistor **112** and is reflected (as described above) to transistor **110**. When $V_{in}$ is high, MOSFET **116** is turned on, connecting the base of bipolar transistor **110** to ground, thereby turning it off and interrupting the flow of current through IRED **62**.

The circuit shown in **Fig. 14I** is in effect a combination of the circuits shown in **Figs. 14D** and **14H**, with the MOSFET pair **100**, **102** substituted for the bipolar pair **110**, **112**. In the manner described above, when $V_{in}$ is low, P-channel MOSFET **118** is turned on, and the current from current source **108** flows through MOSFET **102** and is reflected into MOSFET **100**. When $V_{in}$ is high, MOSFET **116** is turned on, connecting the gate of MOSFET **100** to ground. Since the current is set by a mirror, it does not depend on the absolute value of a voltage reference.

The circuit shown in **Fig. 14J** is similar to the circuit of **Fig. 14I**, except that a current mirror pair of MOSFETs **120** and **122** has been substituted for current source **108**. The current flowing through MOSFET **122** and biasing resistor **124** is reflected into MOSFET **120** and provides the constant current for MOSFET **102**.

**Fig. 14K** shows a circuit including two current mirrors formed of bipolar transistors. The current through transistor **112** is reflected into transistor **110** as described above. $V_{in}$ is fed through a second inverter **132** to the gates of MOSFETs **116** and **118**. When $V_{in}$ is high, P-channel MOSFET **118** is turned on and the current from transistor **126** flows through transistor **112**. The current through transistor **128** is determined by a current source **130** and is reflected into transistor **126**. When $V_{in}$ is low, the P-channel MOSFET **116** is turned on, connecting the base of transistor **110** to ground and turning it off.

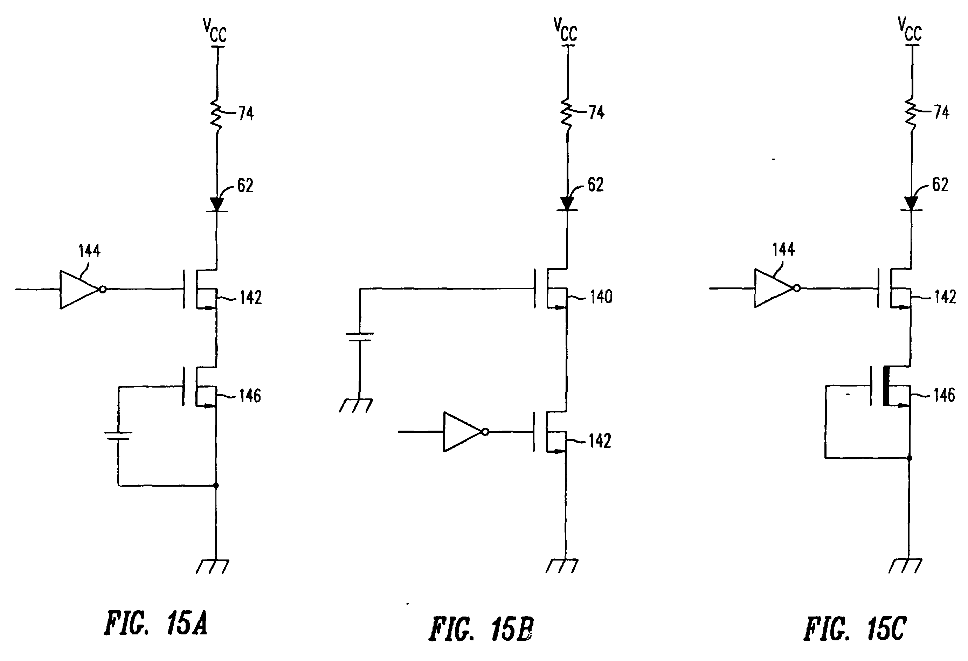

**Fig. 15A** shows an embodiment in which the constant current and switching function are separated. MOSFET **142**, whose gate is controlled by an inverter **144**, is operated so as to switch the current on and off. The constant current is provided by MOSFET **140**, whose gate is biased at a fixed biased voltage. **Fig. 15B** shows an embodiment in which the positions of MOSFETs **140** and **142** are reversed.

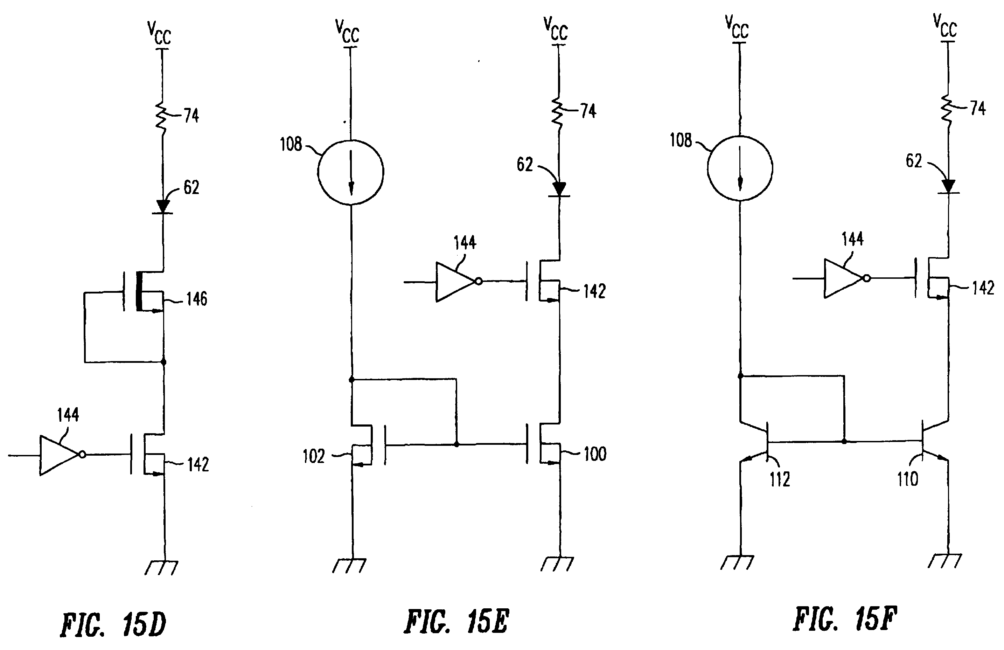

In **Fig. 15C**, the constant current function is provided by a depletion-mode MOSFET **146**, whose gate is tied to its source. The switching function is again provided by MOSFET **142**. In **Fig. 15D**, the locations of MOSFETs **142** and **146** are reversed.

In **Figs. 15A-15D**, the switching MOSFET **142** is operated in its linear region and provides very little resistance when it is turned on. In contrast, MOSFETs **140** and **146** are saturated and provide a constant current.

**Fig. 15E** illustrates an embodiment in which the constant current is provided by a current mirror similar to that illustrated in **Fig. 14D**. The switching function is provided by MOSFET **142**. **Fig. 15F** is similar but bipolar transistors **110** and **112** are substituted for MOSFETs **100** and **102** in the current mirror.

**Fig. 16A** illustrates an embodiment in which the constant current MOSFET **90** is capable of providing two constant currents. A switch **150** controls the gate of MOSFET **90** and connects the gate, alternatively, to a bias **152** which provides $V_{bias1}$ or a bias **154** which provides $V_{bias2}$ or to ground. When the gate of MOSFET **90** is connected to either of the biases **152** or **154**, MOSFET **90** is saturated and conducts a constant current which depends on the value of the gate bias.

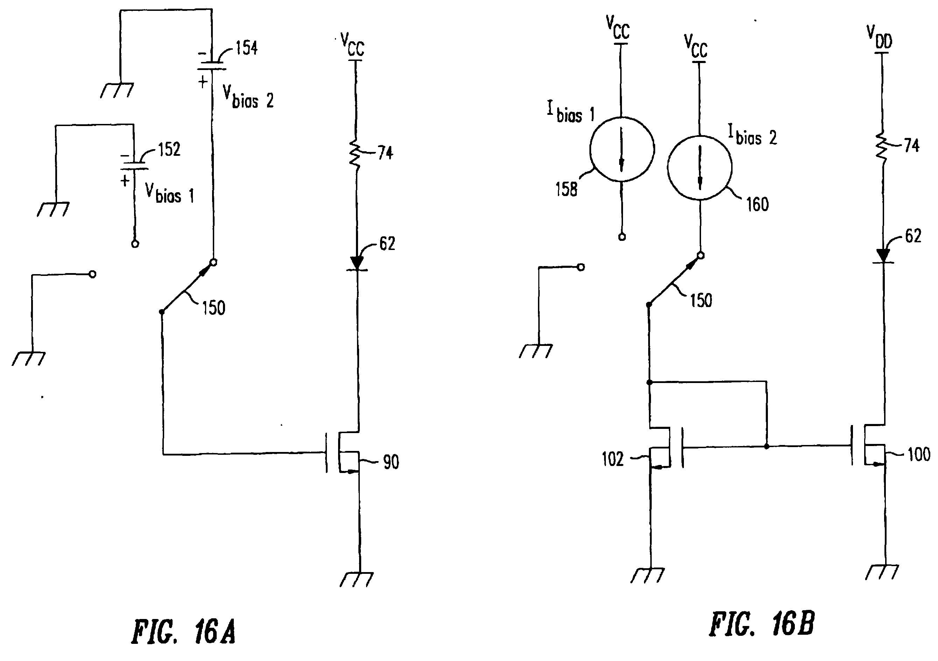

**Fig. 16B** illustrates and embodiment which includes a current mirror containing MOSFETs **100** and **102** and a switch **156** which connects to one of current sources **158** or **160** or to ground. Current source **158** provides a current $I_{bias1}$, and current source **160** provides a current $I_{bias2}$. Thus the current through MOSFET **102** is determined by the position of switch **156** and the current through MOSFET **102** is reflected into MOSFET **100**. When switch **156** is grounded, MOSFET **100** is turned off.

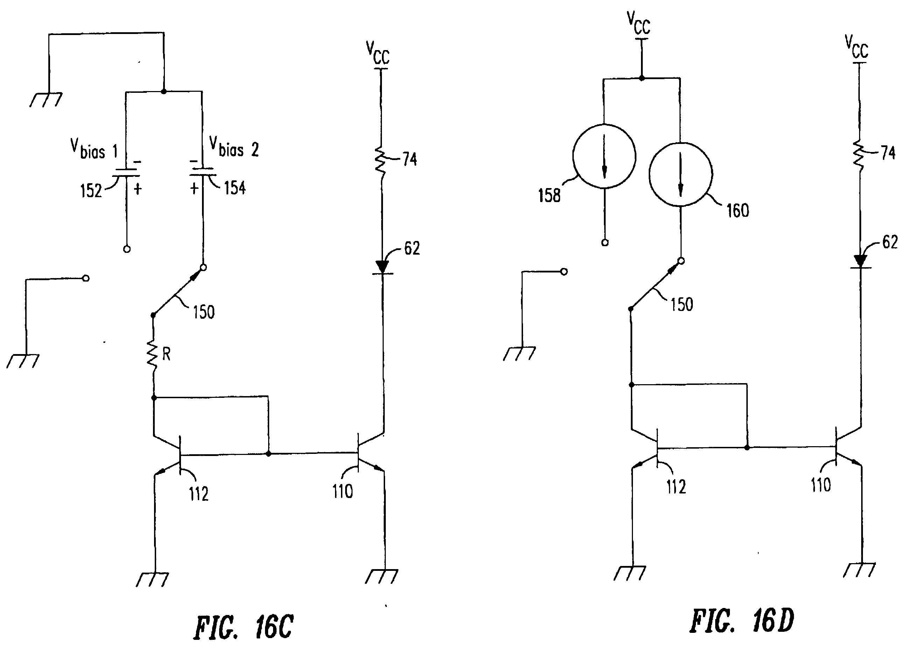

In **Fig. 16C** a current mirror contains bipolar transistors **110** and **112**, with the collector of transistor **112** being connected either to bias **152**, bias **154** or to ground. As described above, bias **152** supplies a $V_{bias1}$, and bias **154** supplies a $V_{bias2}$. **Fig. 16D** shows an embodiment in which current sources **158** and **160**, which provide different constant currents, are substituted for bias sources **152** and **154**.

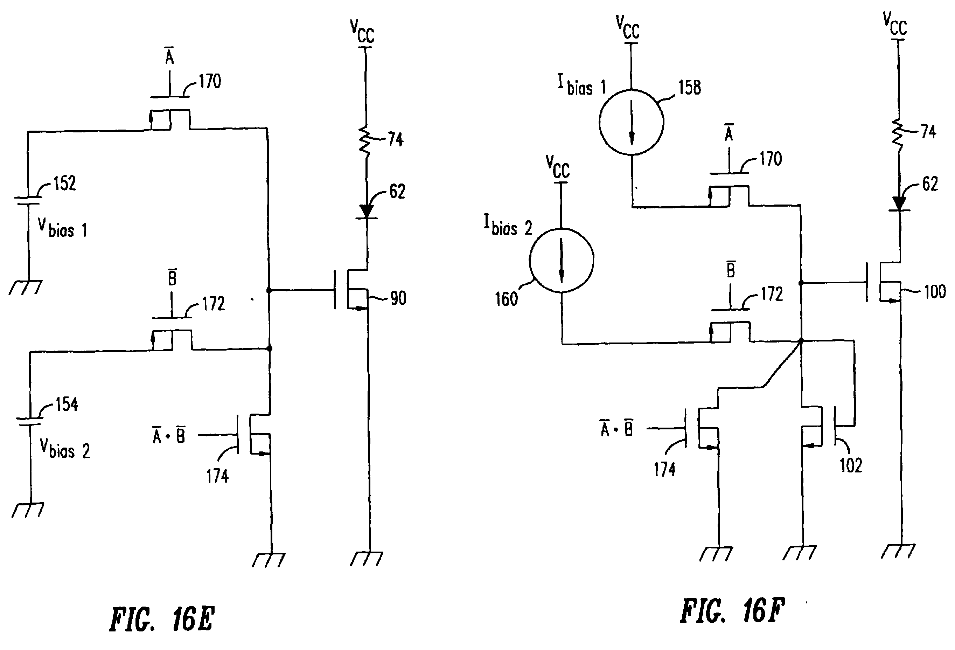

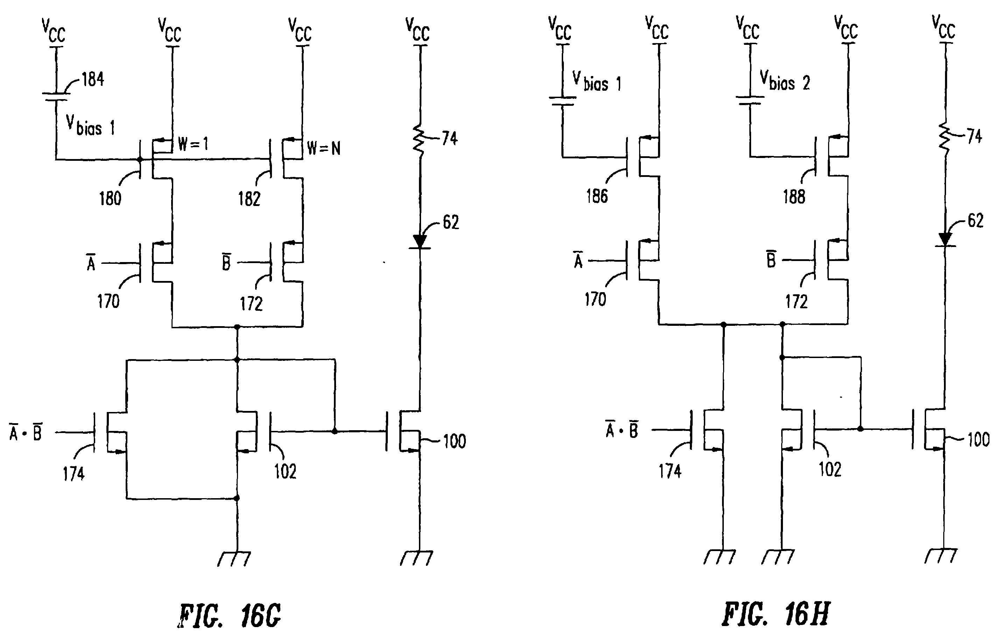

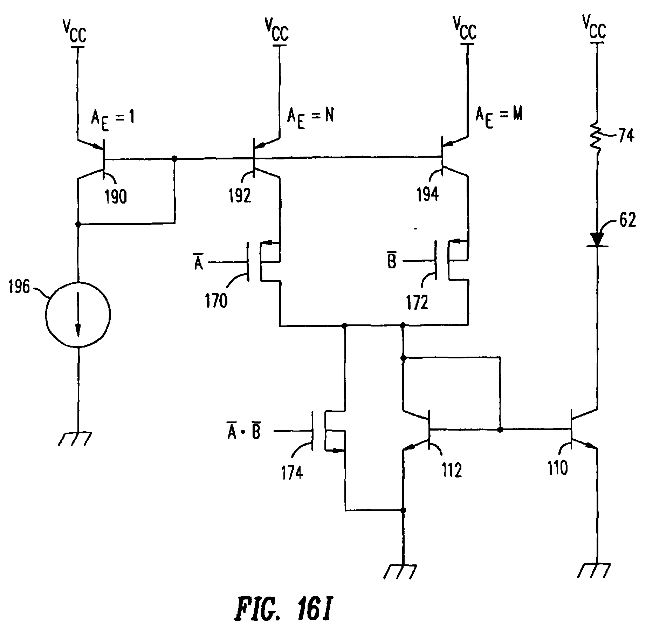

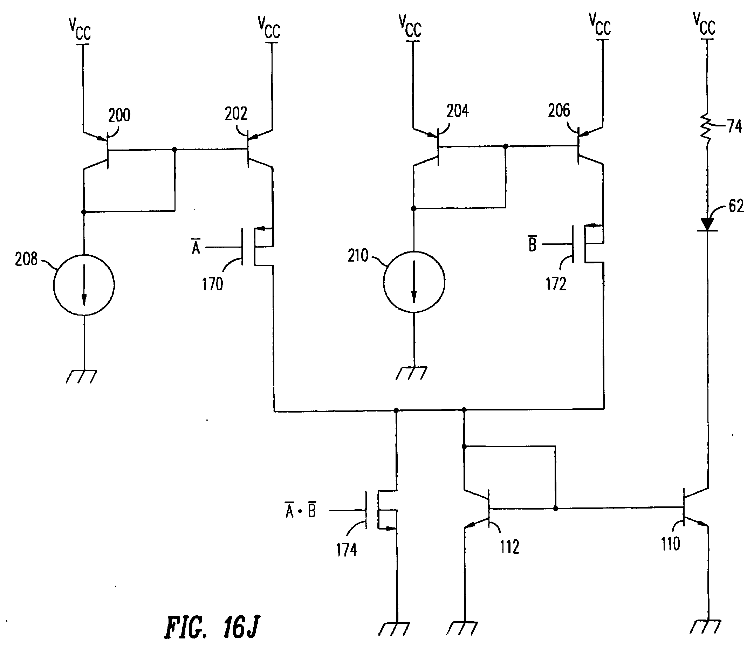

Figs. **16E-16K** show circuits in which pass transistor logic is used to control the size of the current through IRED **62**. In **Fig. 16E**, pass transistors **170** and **172** supply voltages $V_{bias1}$ or $V_{bias2}$, to the gate of MOSFET **90**. MOSFET **174** connects the gate of MOSFET **90** to ground, turning it off. The gates of MOSFETs **170**, **172** and **174** are controlled in accordance with the logic shown in the following truth table.

| $\overline{A}$ | $\overline{B}$ | MOSFET 170 | MOSFET 172 | MOSFET 174 | $V_G$ MOSFET 90 |
|---|---|---|---|---|---|
| 1 | 0 | off | on | off | $V_{bias2}$ |
| 0 | 1 | on | off | off | $V_{bias1}$ |
| 1 | 1 | off | off | on | ground |
| 0 | 0 | n/a | n/a | off | n/a |

Thus, depending on the condition of the input signals $\overline{A}$ and $\overline{B}$, one of MOSFETs **170**, **172** and **174** is turned on, providing a desired bias to the gate of MOSFET **90** and determining the size of the current through MOSFET **90** or turning MOSFET **90** off.

**Fig. 16F** illustrates a current mirror including MOSFETs **100** and **102**. Current sources **158** and **160** provide different currents through MOSFETs **170** and **172**, respectively, thereby determining the size of the current through MOSFET **102** which is reflected into MOSFET **100**. When MOSFET **174** is turned on ($\overline{A} \cdot \overline{B} = 1$) the gate of MOSFET **100** is grounded, turning it off.

**Figs. 16G** and **16H** illustrate circuits which also include MOSFETs **100** and **102** in a current mirror pair. In **Fig. 16G**, the current through MOSFET **102** is determined by the state of MOSFETs **170** and **172**. A bias source **184** is connected to MOSFETs **180** and **182**, which have gate widths related by the ratio of **1** to N, so that the current through MOSFET **182** is N times the current through MOSFET **180**. Thus the state of MOSFETs **170** and **172** determines the size of the current through MOSFET **102**, and this current is reflected into MOSFET **100**. Again, when MOSFET **174** is turned on to ground the gate of MOSFET **100**, MOSFET **100** is turned off.

In **Fig. 16H**, MOSFETs **186** and **188** are operated in saturation and function as current sources. $V_{bias1}$ is applied to the gate of MOSFET **186**, and $V_{bias2}$ is applied to the gate of MOSFET **188**. These gate voltages determine the respective currents through MOSFETs **186** and **188**. Otherwise, this circuit operates in the same manner as the circuit shown in **Fig. 16G**.

**Fig. 16I** illustrates a circuit which is similar to the circuit of **Fig. 16H**, but it uses bipolar transistors rather than MOSFETs. The current mirror pair includes transistors **110** and **112**. A current source **196** provides a constant current through transistor **190**. The current through transistor **190** is reflected into each of transistors **192** and **194**. The emitter areas of transistors **192** and **194** are sized in ratios of N and M, respectively, with respect to the emitter area of transistor **190**. Again, the state of MOSFETs **170** and **172** determines the size of the current through transistor **112**, and this is reflected into transistor **110**. MOSFET **174** is used to ground the base of transistor **110**, turning it off.

The circuit of **Fig. 16J** includes three bipolar current mirror pairs. The basic pair includes transistors **110** and **112**. A second current mirror pair, comprising transistors **220** and **202** supplies a current through MOSFET **170** to transistor **112**, and a third current mirror pair, comprising transistors **204** and **206**, supplies a current through MOSFET **172** to bipolar transistor **112**. Current sources **208** and **210** determine the currents produced by the second and third current mirror pairs respectively. Again, MOSFET switches **170** and **172** determine the size of the current through transistor **112**, and MOSFET **174** is used to turn transistor **110** off.

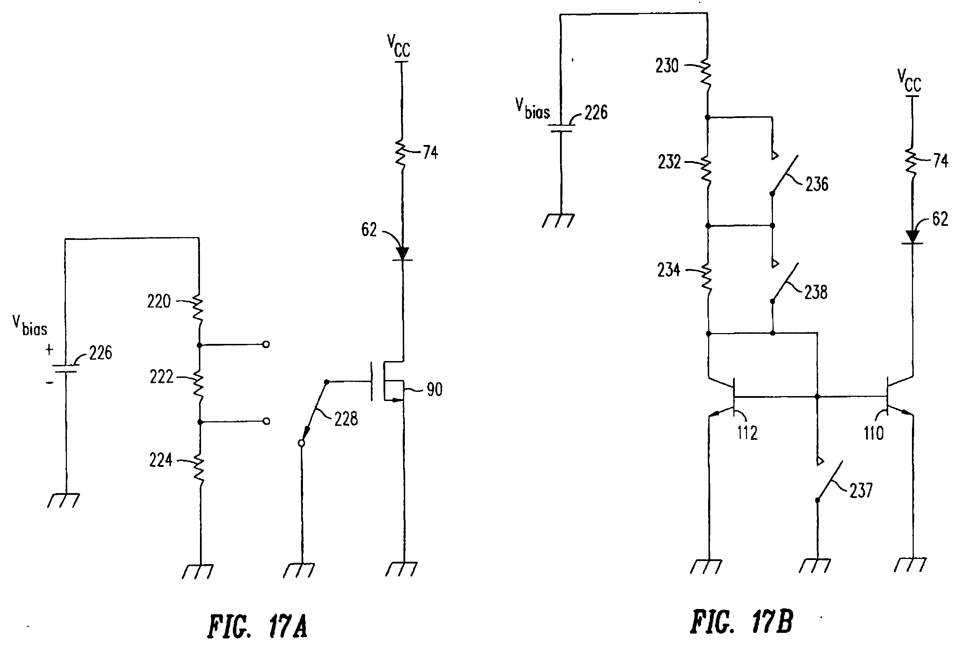

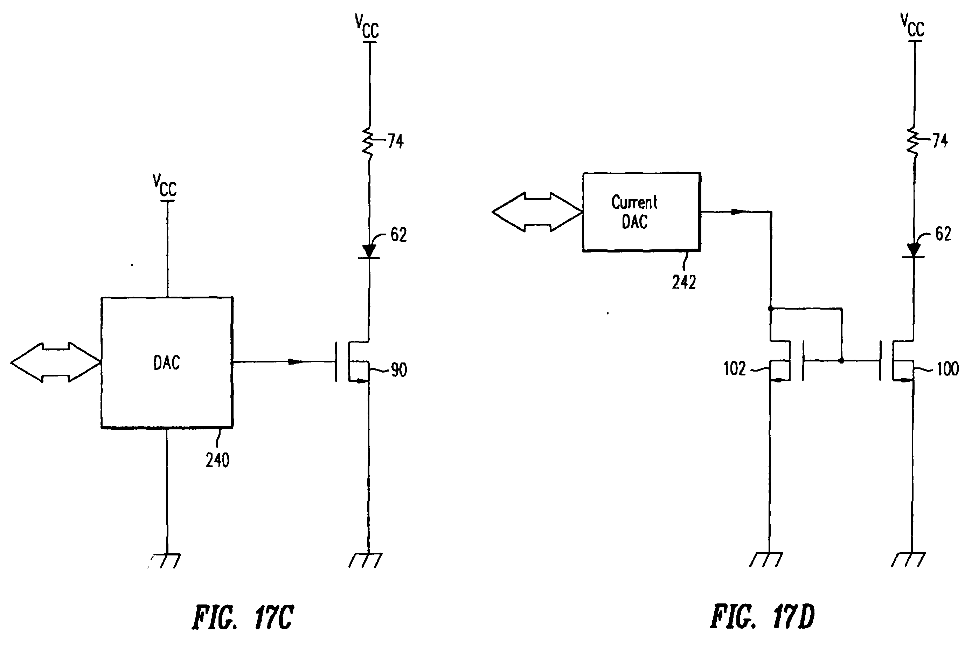

**Figs. 17A** and **17B** illustrate how the current through IRED **62** can be controlled using a resistor tap network. In **Fig. 17A**, resistors **220**, **222** and **224** are connected in series with a voltage source **226**. A three-pole switch **228** is used to connect the gate of MOSFET 90 to nodes between resistors **220**, **222** and **224**, or to ground. As described previously, the gate voltage on MOSFET **90** determines the size of current through IRED **62**.

**Fig. 17B** shows resistors **230**, **232** and **234** connected in series with bipolar transistor **112**, which is current-mirrored to transistor **110**. Switches **236** and **238** are connected in parallel with resistors **232** and **234**, respectively, and are set to control the current through transistor **212**. IRED **64** is turned off by closing switch **237**.

In **Fig. 17C**, a voltage digital-to-analog converter (DAC) **240** is used to set the gate voltage for MOSFET **90** and thereby control the current through IRED **62**. In **Fig. 17D**, a current DAC **242** establishes the current through MOSFET **102**, which is mirrored into MOSFET **100**.

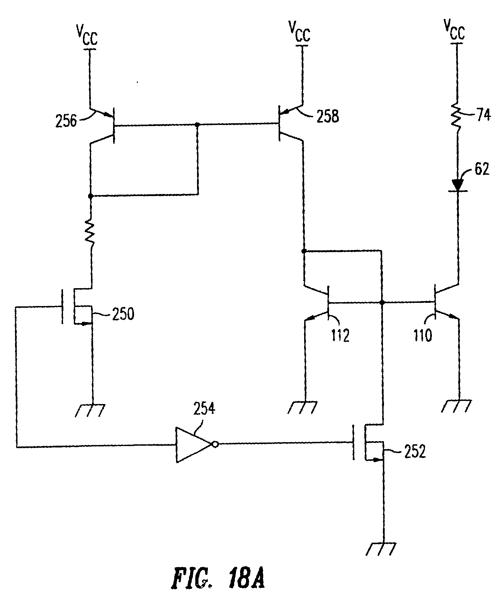

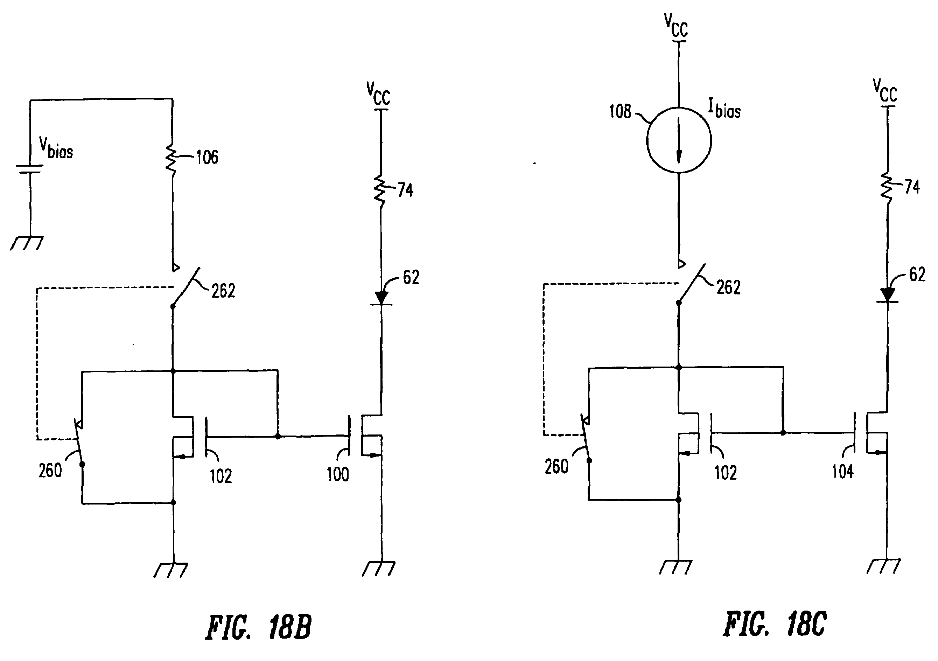

In **Fig. 18A**, a current mirror including bipolar transistors **256** and **258** supplies current to transistor **112**, which is reflected into transistor **110**. MOSFETs **250** and **252** are connected with an inverter **254** in such a way that when MOSFET **252** is turned on, grounding the base of transistor **110**, MOSFET **250** is turned off. Thus no current flows either in the IRED or in the bias circuit when the IRED **62** is not operating. Shutting off the bias supply current makes the circuit more amenable to battery-powered circuits where battery life is critical.

The circuit of **Fig. 18B** is somewhat similar to the circuit shown in **Fig. 14C**, except that switches **260** and **262** are ganged together such that no current flows through MOSFET **102** when switch **260** closed, grounding the gate of MOSFET **100**. **Fig. 18C** shows an embodiment with a current source **108** which supplies a current mirror pair including MOSFETs **102** and **104**. Again, switches **260** and **262** are ganged such that no current flows either in the IRED or in the bias circuit when IRED **62** is turned off.

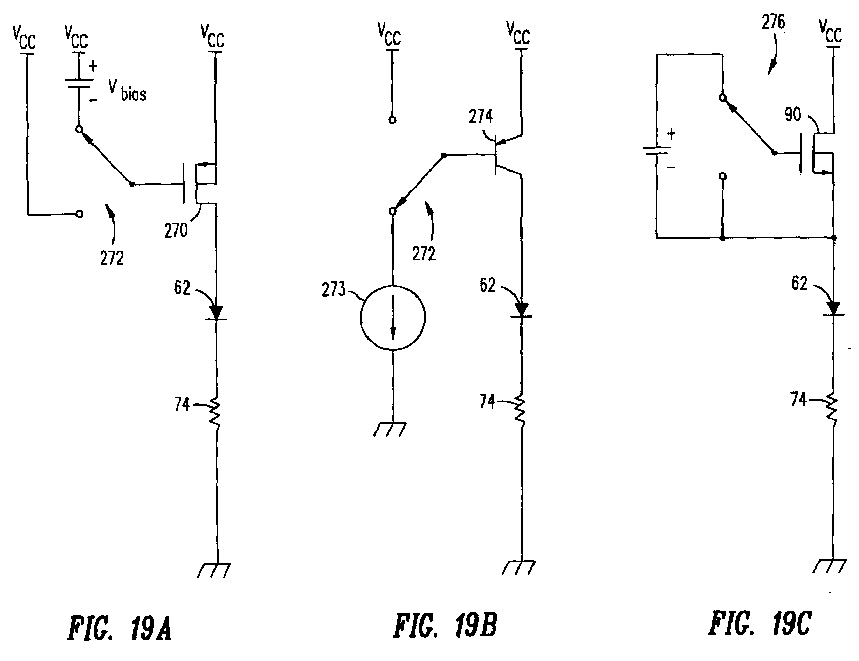

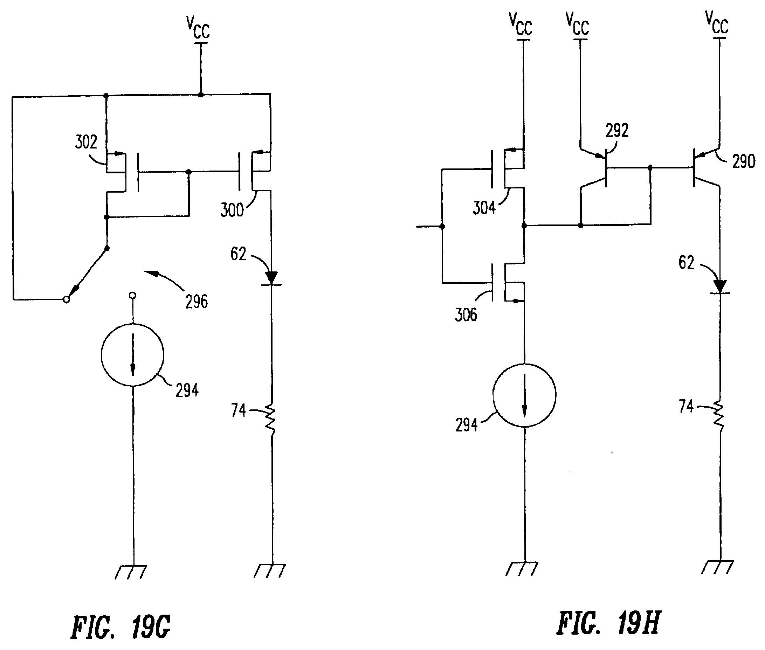

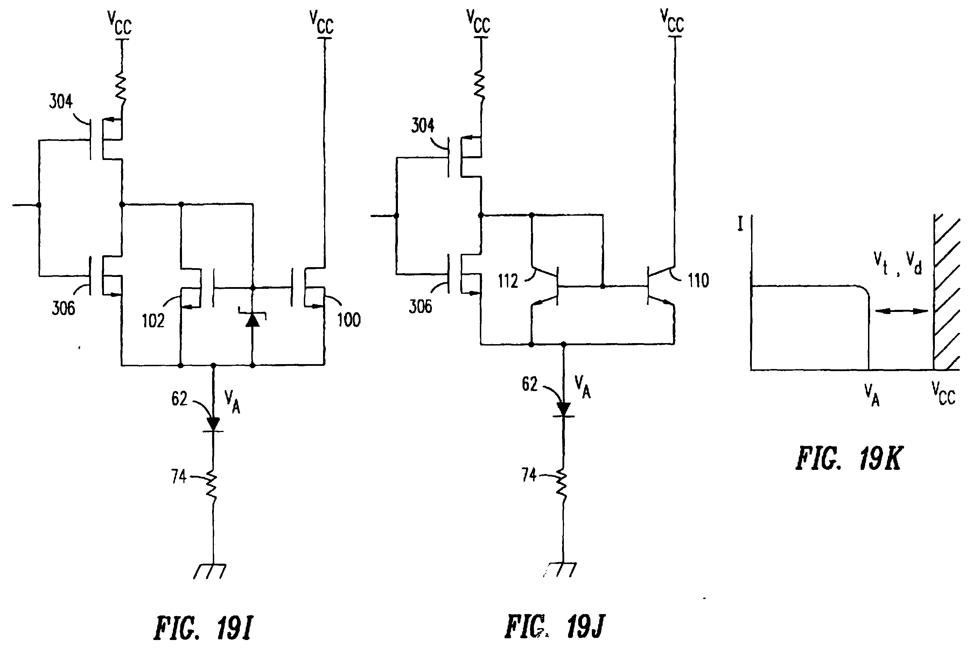

**Fig. 19A** shows a circuit with a P-channel MOSFET **270** connected on the high side of IRED **62**. A switch **272** controls the gate of MOSFET **270**, either connecting the gate to $V_{CC}$ to turn MOSFET **270** off, or connecting the date to a voltage equal to $V_{CC}$ - $V_{BIAS}$ to provide a constant current flow through MOSFET **270**.

In **Fig. 19B**, a PNP bipolar transistor **274** is connected on the high side of IRED **62**. Switch **272** connects the base of transistor **274** either to $V_{CC}$, turning transistor **274** off or to a current source **273**, providing a constant base current to transistor **274**. In this condition, the collector current in transistor **274**, which supplies IRED **62**, is also held at a constant level.

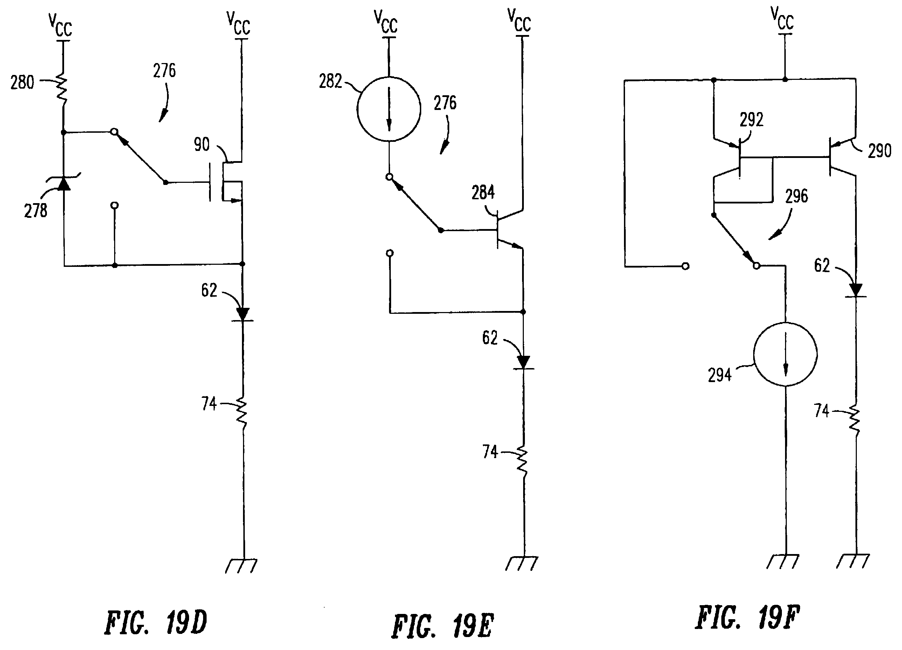

In **Fig. 19C**, an N-channel MOSFET **90** is connected on the high side of IRED **62**. Switch **276** either ties the gate of MOSFET **90** to its source, turning MOSFET **90** off, or supplies a constant gate-to-source voltage to MOSFET **90**, holding the current through MOSFET **90** constant. The circuit shown in **Fig. 19D** is similar, except that series network including a zener diode **278** and a resistor **280** provides a gate voltage to MOSFET **90** when it is turned on.

In **Fig. 19E**, a current source **282** supplies a base current to PNP transistor **284** when switch **276** is in one position, and the base and emitter of transistor **284** are tied together when switch **276** is in the other condition, turning it off.

The circuit shown in **Fig. 19F** includes a current mirror pair consisting of bipolar transistors **290** and **292**. Switch **296** connects transistor **292** to a current source **294**, stabilizing the current through IRED **62**. In its other position, switch **296** ties the base of transistor **292** to $V_{CC}$, turning transistor **292** off. **Fig. 19G** shows a circuit in which MOSFETs **300** and **302** are substituted for bipolar transistors **290** and **292**.

In the circuit of **Fig. 19H**, IRED **62** is supplied via a current mirror pair which includes bipolar transistors **290** and **292**. A control signal is applied in common to the respective gates of P-channel MOSFET **304** and N-channel MOSFET **306**. When the control signal is high N-channel MOSFET **306** is turned on and the current source **294** supplies current to transistor **292**. This current is reflected into transistor **290**. When the control signal is low P-channel MOSFET **304** is turned on connecting the base of transistor **290** to $V_{CC}$. Transistor **290** is then turned off.

In **Fig. 19I**, a current mirror pair including MOSFETs **100** and **102** is controlled by MOSFETs **304** and **306**. When the control signal applied to the gates of MOSFETs **304** and **306** is low, P-channel MOSFET **304** is turned on and current is supplied to MOSFET **102**. The total current through MOSFETs **100** and **102** is held constant and supplies IRED **62**. Conversely, when N-channel MOSFET **306** is turned on, MOSFETs **100** and **102** are turned off, interrupting the flow of current through IRED **62**. In the circuit of **Fig. 19J**, bipolar transistors **110** and **112** are substituted for MOSFETs **100** and **102**. The embodiments of **19I** and **19J** follow a resistive approach rather than a constant current approach. The current mirror pair operates as followers. As the graph shown in **Fig. 19K** indicates, when the anode voltage $V_A$ of IRED **62** rises to the point where it is within a certain differential from $V_{CC}$, the current through the circuit collapses.

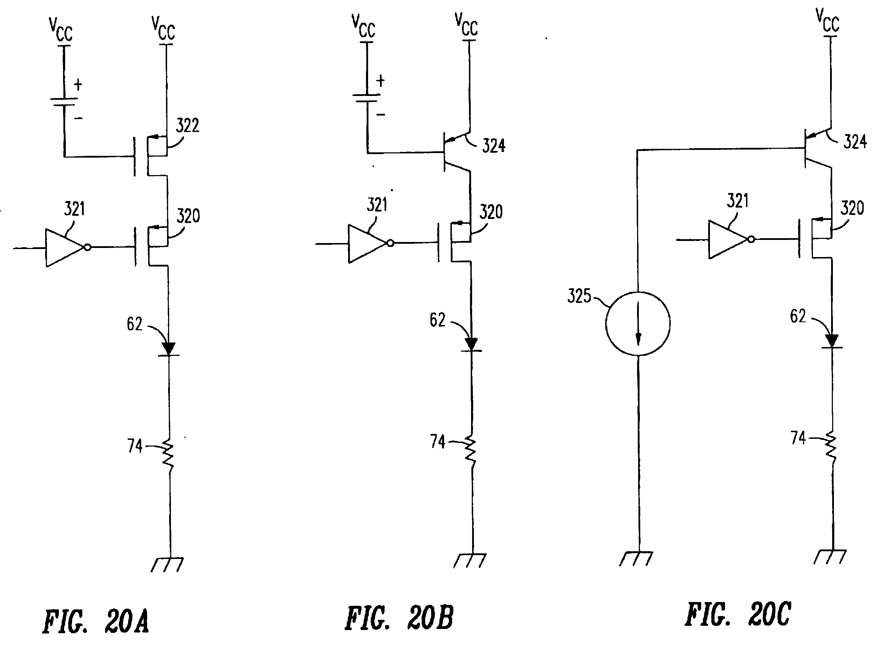

**Figs. 20A-20H** show various combinations of a constant current device and a switch connected in series on the high side of IRED **62**. In **Fig. 20A** a P-channel MOSFET **320** is used as a switch and a P-channel MOSFET **322** is used as a constant current source. The gate of MOSFET **320** is controlled through an inverter **321**, and the gate of MOSFET **322** is biased at a constant voltage in relation to $V_{CC}$.

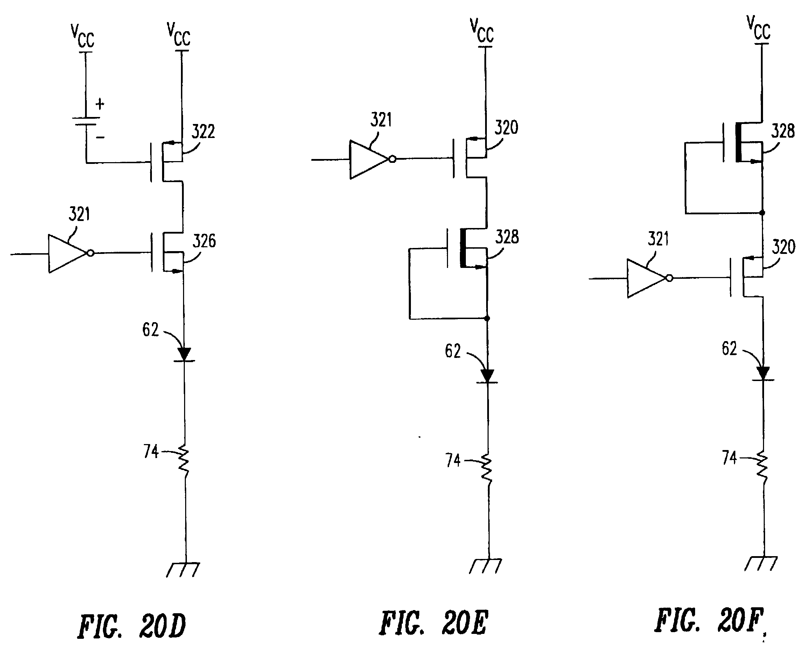

In **Fig. 20B** a bipolar transistor **324** is substituted for MOSFET **322**. In **Fig. 20C**, a constant current source **325** is connected between the base of transistor **324** and ground, thereby providing a constant collector current in transistor **324**. **Fig. 20D** is similar to **Fig. 20A** except that an N-channel MOSFET **326** is used as a switch.

In **Fig. 20E**, the switching MOSFET **320** is connected on the high side of an N-channel depletion-mode MOSFET **328**, which has its gate tied to its source and provides a constant current. In **Fig. 20F**, the positions of MOSFET **320** and depletion-mode MOSFET **328** are reversed.

In **Fig. 20G**, a constant current is provided by a current mirror arrangement including MOSFETs **330** and **332**. In **Fig. 20H**, bipolar transistors **334** and **334** are substituted for MOSFETs **330** and **332**.

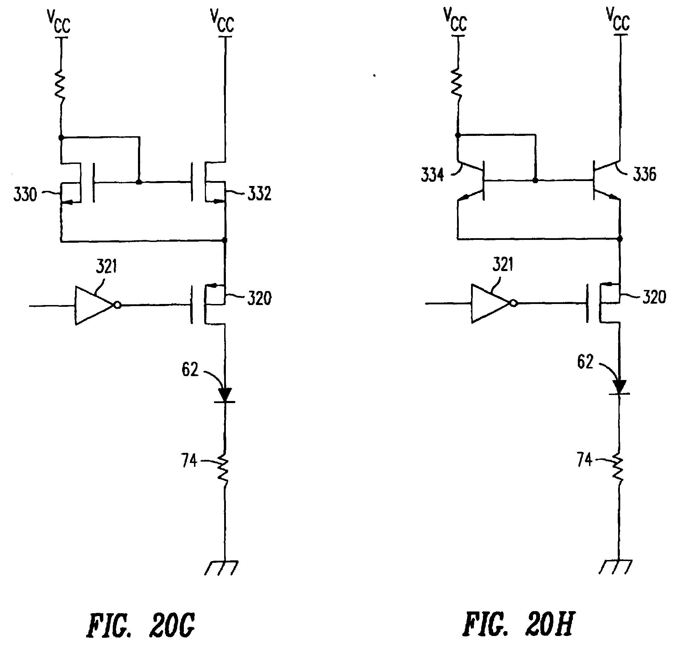

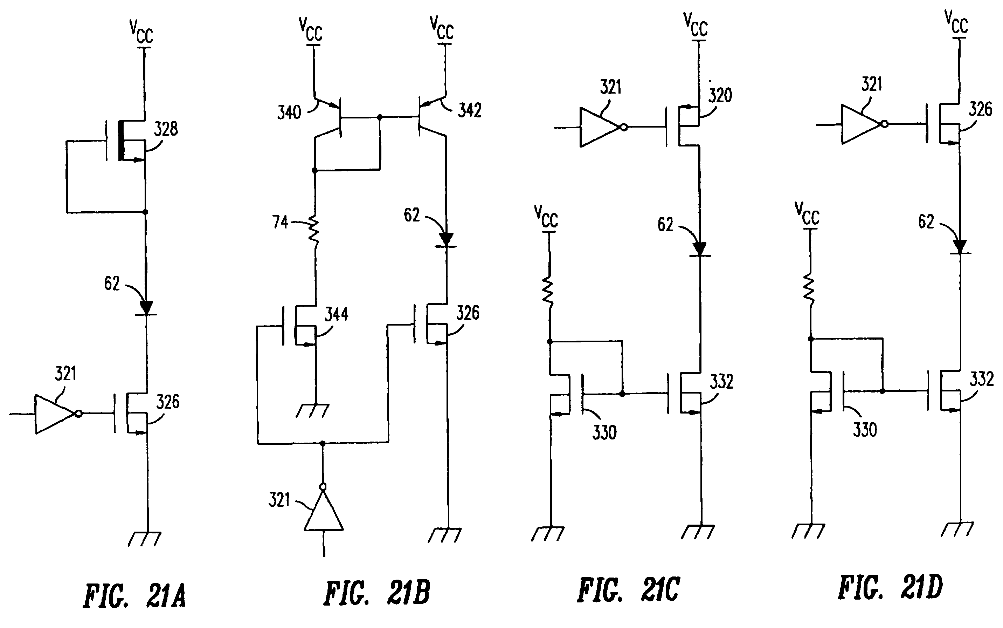

**Figs. 21A-21D** illustrate embodiments in which the current source and switch are located on opposite sides of the IRED. The circuit of **Fig. 21A** shows depletion-mode MOSFET **328** connected on the high side of IRED **62** and switching MOSFET **326** on the low side of IRED **62**. In **Fig. 21B**, a current mirror containing bipolar transistors **340** and **342** is connected on the high side of IRED **62** and MOSFET **326** is connected on the low side of IRED **62**. A MOSFET **344** is operated synchronously with MOSFET **326** to turn off current flow in the current mirror when the IRED **62** is turned off. In **Fig. 21C** a current mirror containing MOSFETs **330** and **332** is connected on the low side of IRED **62** and switching MOSFET **320** is connected on the high side of IRED **62**. **Fig. 21D** is similar to **Fig. 21C** except that N-channel MOSFET **326** has been substituted for P-channel MOSFET **320**.

While numerous embodiments in accordance with this invention have been described above, it will be apparent to those skilled in the art that there are may additional embodiments that fall within the broad scope of this invention. This invention, as defined by the following claims, includes all such embodiments.

**Claims**

1.   A circuit for driving an infrared-emitting diode comprising a constant current source connected in series with the infrared-emitting diode.

2.   The circuit of Claim 1 wherein said constant current source is connected on a high side of the infrared-emitting diode.

3.   The circuit of Claim 1 wherein said constant current source is connected on a low side of the infrared-emitting diode.

4.   The circuit of Claim 1 further comprising a switch connected in series with said infrared-emitting diode.

5.   The circuit of Claim 4 wherein said switch is connected on the same side of said infrared-emitting diode as said constant current source.

6.   The circuit of Claim 4 wherein said switch is connected on the opposite side of said infrared-emitting diode from said constant current source.

7.   The circuit of Claim 1 wherein said constant current source comprises a MOSFET, said MOSFET being for providing a constant current when operated in saturation.

8.   The circuit of Claim 1 wherein said constant current source comprises a bipolar transistor, said bipolar transistor being for providing a constant current when operated in saturation.

9.   The circuit of Claim 1 wherein said constant current source is capable of providing more than one level of current.

10.  The circuit of Claim 1 wherein said constant current source comprises a switched constant current source.

11.  The circuit of Claim 1 wherein said constant current source comprises a pair of transistors which are designed to operate as a current mirror.

12.  The circuit of Claim 11 wherein said transistors comprise MOSFETs.

13.  The circuit of Claim 11 wherein said transistors comprise bipolar transistors.

14.  The circuit of Claim 11 wherein a first one of said transistors is connected in series with said infrared-emitting diode.

15. The circuit of Claim 14 wherein a second one of said transistors is connected in a second current path that is parallel to a current path in which said infrared-emitting diode is connected.

16. The circuit of Claim 15 wherein said second current path includes a second constant current source.

17. The circuit of Claim 1 wherein said constant current source comprises a pass transistor logic arrangement for controlling the voltage at the gate of a MOSFET.

18. The circuit of Claim 1 wherein said constant current source comprises a depletion-mode MOSFET.

19. The circuit of Claim 1 wherein said constant current source comprises a resistor tap network.

20. The circuit of Claim 1 wherein said constant current source comprises a digital-to-analog converter for controlling the voltage at the gate of a MOSFET.

21. A device for communicating remotely with a second device, said first device comprising an infrared-emitting diode connected in series with a constant current device.

22. The device of Claim 21 further comprising a PIN diode for receiving infrared radiation from said second device.

23. The device of Claim 22 wherein said infrared diode and said PIN diode are coupled to a transceiver.

24. The device of Claim 23 further comprising an input/output unit coupled to a microprocessor.

25. A method of communicating comprising pulsing a constant current through an infrared-emitting diode.

*FIG. 1*

$I_{IRED}$

$P_{IRED} (\lambda)$

38

40

1.6

$V_{IRED}$

## FIG. 2A

$I_{IRED}$

85°C     25°C     -20°C

$V_{IRED}$

## FIG. 2B

FIG. 3A
(Prior Art)

FIG. 3B
(Prior Art)

FIG. 4A
(Prior Art)

$$\frac{V_{CC} - V_{IRED}}{R + R_{DS}}$$

*FIG. 4B*

$V_{CC}$

$V_{GS}$

$V_t$

0                0

$I_D$

$$\frac{V_{CC} - V_{IRED}}{R + R_{DS}}$$

0                0

Pout($\lambda$)

0                0

$V_{CC}$                $V_{CC}$

$V_{DS}$

$I \cdot R_{DS}$

0                0

*FIG. 4C*

$I_{IRED} = I_D$

$\dfrac{V_{CC} - V_{IRED}}{R_2}$

−20°C

25°C

125°C

$\dfrac{V_{CC} - V_{IRED}}{R_1}$

$R_2$

1 Cell
Li Ion

$R_1$

1.5

2.5

4.2

5

$V_{CC}$ (V)

*FIG. 5*

EP 0 929 022 A1

FIG. 6

FIG. 8

$V_{DD}$

60

$I = f\,(control) \neq f\,(V_{DD})$

Control

$I_{IRED}$

62

$\lambda$

**FIG. 7A**

$V_{DD}$

62

$\lambda$

$I_{IRED}$

60

Control

**FIG. 7B**

EP 0 929 022 A1

$V_{CC}$

$I_1$

64

70

62

λ

74   R

**FIG. 9A**

$V_{CC}$   $V_{CC}$

64   $I_1$   $I_2$

66

$I_3 \approx 0$
Open

72

62

λ

74   R

**FIG. 9B**

$V_{CC}$

68   $I_1 = f(V_{in})$

62

λ

74   R

**FIG. 9C**

FIG. 10A

FIG. 10B

FIG. 10C

EP 0 929 022 A1

V_CC

I_1

64

62

λ

74 R

70

**FIG. 11A**

V_CC          V_CC

I_1            I_2

64            66

76

62

λ

74 R

78

**FIG. 11B**

V_CC

68          I = f(V_in)

V_in

62

λ

74 R

78

**FIG. 11C**

FIG. 12A

FIG. 12B

FIG. 12C

FIG. 13A          FIG. 13B          FIG. 13C          FIG. 13D

EP 0 929 022 A1

$V_{CC}$

74

62

92

80

90

$V_{bias}$

+

−

**FIG. 14A**

$V_{CC}$

74

62

92

80

94

$V_{bias}$

+

−

**FIG. 14B**

FIG. 14D

FIG. 14C

EP 0 929 022 A1

$V_{CC}$     $V_{CC}$

106     74

104     62

$A_E = 1$     $A_E = N$

112     110

*FIG. 14E*

$V_{CC}$     $V_{CC}$

108     74

104     62

$A_E = 1$     $A_E = N$

112     110

*FIG. 14F*

EP 0 929 022 A1

*FIG. 14G*

*FIG. 14H*

**FIG. 14J**

**FIG. 14I**

FIG. 14K

30

EP 0 929 022 A1

FIG. 15A

FIG. 15B

FIG. 15C

FIG. 15F

FIG. 15E

FIG. 15D

FIG. 16B

FIG. 16A

EP 0 929 022 A1

FIG. 16C

FIG. 16D

FIG. 16F

FIG. 16E

FIG. 16G

FIG. 16H

EP 0 929 022 A1

*FIG. 16I*

FIG. 16J

EP 0 929 022 A1

EP 0 929 022 A1

FIG. 17A

FIG. 17B

FIG. 17D

FIG. 17C

FIG. 18A

EP 0 929 022 A1

**FIG. 18B**

**FIG. 18C**

*FIG. 19A*

*FIG. 19B*

*FIG. 19C*

FIG. 19D

FIG. 19E

FIG. 19F

FIG. 19H

FIG. 19G

FIG. 19I

FIG. 19J

FIG. 19K

EP 0 929 022 A1

FIG. 20A

FIG. 20B

FIG. 20C

EP 0 929 022 A1

EP 0 929 022 A1

FIG. 20D

FIG. 20E

FIG. 20F

**FIG. 20G**

**FIG. 20H**

EP 0 929 022 A1

FIG. 21A

FIG. 21B

FIG. 21C

FIG. 21D

EP 0 929 022 A1

EP 0 929 022 A1

| | | | |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 5 392 313 A (NORO MASAO) 21 February 1995 * abstract * * column 8, line 28 - column 10, line 2; figure 18 * | 1-3,8, 21,25 | G05F3/26 G08C23/04 |
| Y | | 4-7, 9-20, 22-24 | |
| X | US 4 437 240 A (JUENGEL RICHARD O ET AL) 20 March 1984 * column 2, line 59 - column 4, line 15; figure 2 * | 1-3 | |
| Y | EP 0 379 303 A (HEWLETT PACKARD CO) 25 July 1990 * column 5, line 15 - column 6, line 16; figure 2 * | 4-7 | |
| Y | EP 0 563 580 A (CANON KK) 6 October 1993 * page 5, line 32 - page 6, line 3; figures 8A,9 * | 9-18 | |
| Y | US 4 443 890 A (EUMURIAN GREGOIRE) 17 April 1984 * column 4, line 7 - line 14; figure 1 * | 22,23 | TECHNICAL FIELDS SEARCHED (Int.Cl.6) G05F G08C |
| Y | PATENT ABSTRACTS OF JAPAN vol. 013, no. 177 (M-818), 26 April 1989 & JP 01 005863 A (NEC CORP), 10 January 1989 * abstract * | 19 | |
| Y | PATENT ABSTRACTS OF JAPAN vol. 012, no. 167 (E-610), 19 May 1988 & JP 62 276934 A (SHARP CORP), 1 December 1987 * abstract * | 20 | |

-/--

The present search report has been drawn up for all claims

| Place of search | Date of completion of the search | Examiner |
|---|---|---|
| MUNICH | 19 February 1999 | Helot, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

# EUROPEAN SEARCH REPORT

**European Patent Office**

**Application Number**
EP 98 12 1314

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | US 5 559 499 A (HAUBNER GEORG ) 24 September 1996 * abstract; figure 1 * ----- | 24 | |

**TECHNICAL FIELDS SEARCHED (Int.Cl.6)**

The present search report has been drawn up for all claims

| Place of search | Date of completion of the search | Examiner |
|---|---|---|
| MUNICH | 19 February 1999 | Helot, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 0 929 022 A1**

ANNEX TO THE EUROPEAN SEARCH REPORT
ON EUROPEAN PATENT APPLICATION NO.

EP 98 12 1314

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-1999

| Patent document cited in search report | | Publication date | Patent family member(s) | | Publication date |
|---|---|---|---|---|---|
| US 5392313 | A | 21-02-1995 | JP | 2611561 B | 21-05-1997 |
| | | | JP | 4356895 A | 10-12-1992 |
| | | | JP | 2611562 B | 21-05-1997 |
| | | | JP | 4356896 A | 10-12-1992 |
| US 4437240 | A | 20-03-1984 | US | 4328623 A | 11-05-1982 |
| | | | AU | 547869 B | 07-11-1985 |
| | | | AU | 7421381 A | 04-03-1982 |
| | | | BE | 890125 A | 16-12-1981 |
| | | | BR | 8105456 A | 11-05-1982 |
| | | | CA | 1174327 A | 11-09-1984 |
| | | | DE | 3133018 A | 08-04-1982 |
| | | | FR | 2490807 A | 26-03-1982 |
| | | | GB | 2084737 A,B | 15-04-1982 |
| | | | JP | 1645342 C | 28-02-1992 |
| | | | JP | 3003279 B | 18-01-1991 |
| | | | JP | 57120198 A | 27-07-1982 |
| | | | SE | 449709 B | 18-05-1987 |
| | | | SE | 8105075 A | 01-03-1982 |
| EP 0379303 | A | 25-07-1990 | US | 4864216 A | 05-09-1989 |
| EP 0563580 | A | 06-10-1993 | JP | 5243654 A | 21-09-1993 |
| | | | DE | 69311755 D | 31-07-1997 |
| | | | DE | 69311755 T | 08-01-1998 |
| | | | EP | 0704948 A | 03-04-1996 |
| | | | US | 5349595 A | 20-09-1994 |
| US 4443890 | A | 17-04-1984 | FR | 2495412 A | 04-06-1982 |
| | | | AT | 8831 T | 15-08-1984 |
| | | | EP | 0053545 A | 09-06-1982 |
| | | | JP | 57119531 A | 26-07-1982 |
| US 5559499 | A | 24-09-1996 | DE | 4202759 A | 12-08-1993 |
| | | | WO | 9315486 A | 05-08-1993 |
| | | | DE | 59207145 D | 17-10-1996 |
| | | | EP | 0624270 A | 17-11-1994 |
| | | | JP | 7503089 T | 30-03-1995 |

EPO FORM P0459

For more details about this annex : see Official Journal of the European Patent Office. No. 12/82